(19) Europäisches Patentamt
European Patent Office
Office européen des brevets

(11) **EP 4 287 986 B1**

(12) **EUROPEAN PATENT SPECIFICATION**

(45) Date of publication and mention
of the grant of the patent:
**30.07.2025 Bulletin 2025/31**

(21) Application number: **22702312.4**

(22) Date of filing: **26.01.2022**

(51) International Patent Classification (IPC):
*A61C 7/28* (2006.01)        *A61C 7/30* (2006.01)
*A61C 7/34* (2006.01)

(52) Cooperative Patent Classification (CPC):
**A61C 7/30; A61C 7/287; A61C 7/34**

(86) International application number:
**PCT/IB2022/050683**

(87) International publication number:
**WO 2022/167899 (11.08.2022 Gazette 2022/32)**

(54) **ORTHODONTIC APPLIANCE AND ORTHODONTIC SYSTEM**

ORTHODONTISCHE VORRICHTUNG UND ORTHODONTISCHES SYSTEM

APPAREIL ORTHODONTIQUE ET SYSTÈME ORTHODONTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2021 US 202163199926 P**

(43) Date of publication of application:
**13.12.2023 Bulletin 2023/50**

(73) Proprietor: **Solventum Intellectual Properties
Company
Maplewood, MN 55144 (US)**

(72) Inventors:
• **CINADER, David K., Jr.**
**Saint Paul, Minnesota 55133-3427 (US)**
• **LAI, Ming-Lai**
**Saint Paul, Minnesota 55133-3427 (US)**

• **PAEHL, Ralf M.**
**49152 Bad Essen (DE)**
• **BLEES, Dietmar**
**49152 Bad Essen (DE)**
• **SCHLIMPER, Ralf**
**49152 Bad Essen (DE)**
• **GOLCHER, André**
**49152 Bad Essen (DE)**

(74) Representative: **Vossius & Partner
Patentanwälte Rechtsanwälte mbB
Siebertstraße 4
81675 München (DE)**

(56) References cited:
**EP-A1- 3 461 454        US-A1- 2011 143 301
US-A1- 2016 228 217**

## Description

### Technical Field

The present disclosure relates generally to an orthodontic appliance, an orthodontic system, and a method, and in particular, to an orthodontic appliance for receiving an archwire, an orthodontic system including a plurality of orthodontic appliances, and a method of use with the archwire and the orthodontic appliance.

### Background

Orthodontic appliances, such as orthodontic brackets, may be used in orthodontic treatments by dental practitioners for moving one or more teeth of a patient from a malposition to a desired position in a dentition of the patient. The orthodontic treatments may improve a facial appearance of the patient. In some cases, the orthodontic treatments may also improve function of the teeth by providing improved occlusion during mastication.

US 2011/143301 A1 relates to an orthodontic bracket system comprised of orthodontic appliances, such as brackets or buccal tubes, with a buccal-labial slot orientation. Brackets in the system include a base for bonding the appliance to a tooth and a body extending from the base. An arch wire slot extends across the body in a generally mesial-distal direction and opens in a generally buccal-labial direction. The body has a chamfer that widens the arch wire slot at its opening. A resilient retention device such as a spring is associated with the slot and has a terminal portion opposite the chamfer when in a resting position to permit both entry and removal of an arch wire from said slot. The arch wire retention device is designed to guide, retain and/or seat the arch wire in cooperation with the arch wire slot, and in cooperation with the chamfer permits entry or release of the arch wire from the arch wire slot as the arch wire is moved along the chamfer.

EP 3 461 454 A1 relates to an orthodontic bracket which includes a backend surface, a frontend surface, a first side surface, a second side surface, and a passageway. The backend surface is adapted for attachment and is opposite the frontend surface. The first and second side surfaces are connected between the backend surface and the frontend surface. The passageway extends from the first side surface to the second side surface. The cross-section of the passageway includes an access opening, an archwire slot, a path portion, and at least one rotation portion. The access opening is configured to allow the archwire to enter the passageway. The archwire slot is configured to receive the archwire. The path portion connects the access opening and the archwire slot. The rotation portion is provided in the path portion to allow the archwire to change its orientation.

## Summary

The invention is defined in the appended claim. Aspects, embodiments and examples disclosed herein which do not fall within the scope of the appended claims do not form part of the invention and are merely provided for illustrative purposes.

In one aspect, the present disclosure provides an orthodontic appliance for removably receiving an archwire. The orthodontic appliance includes a body defining a slot. The slot includes an inserting portion. The inserting portion includes an open end. The inserting portion extends along a first axis from the open end. The inserting portion is configured to removably receive the archwire therein through the open end. The slot further includes a receiving portion spaced apart from the open end and communicating with the inserting portion. The receiving portion extends along a second axis inclined to the first axis by an inclination angle. The body further defines an opening communicating with the inserting portion of the slot and spaced apart from the receiving portion of the slot. The orthodontic appliance further includes a locking member at least partially and movably received within the opening. The locking member is movable at least along the first axis between a locked state and an unlocked state. The locking member is normally biased to the locked state and movable to the unlocked state. In the locked state, the locking member at least partially extends into the inserting portion of the slot. In the unlocked state, the locking member is displaced from the locked state into the opening along the first axis. Upon application of an external force, the locking member is movable to the unlocked state to allow movement of the archwire between the inserting portion and the receiving portion. Furthermore, upon removal of the external force, the locking member is movable to the locked state to removably retain the archwire within the receiving portion of the slot.

In another aspect, the present disclosure provides an orthodontic system for a plurality of teeth. The orthodontic system includes an archwire. The orthodontic system further includes a plurality of orthodontic appliances. At least one orthodontic appliance from the plurality of orthodontic appliances is configured to at least partially and removably receive the archwire therein. Further, the at least orthodontic appliance is configured to be detachably coupled to a corresponding tooth from the plurality of teeth. The at least one orthodontic appliance includes a body defining a slot. The slot includes an inserting portion. The inserting portion includes an open end. The inserting portion extends along a first axis from the open end. The inserting portion is configured to removably receive the archwire therein through the open end. The slot further includes a receiving portion spaced apart from the open end and communicating with the inserting portion. The receiving portion extends along a second axis inclined to the first axis by an inclination angle. The body further defines an opening communicating with the inserting portion of the slot and spaced apart from the receiving portion of the slot. The at least one orthodontic appliance further includes a locking member at least partially and movably received within the opening. The locking member is movable at least along the first axis between a locked state and an unlocked state. The locking member is normally biased to the locked state and movable to the unlocked state. In the locked state, the locking member at least partially extends into the inserting portion of the slot. In the unlocked state, the locking member is displaced from the locked state into the opening along the first axis. Upon application of an external force, the locking member is movable to the unlocked state to allow movement of the archwire between the inserting portion and the receiving portion. Further, upon removal of the external force, the locking member is movable to the locked state to removably retain the archwire within the receiving portion of the slot.

In another aspect, the present disclosure provides a method for use with an archwire and an orthodontic appliance. The orthodontic appliance includes a slot including an inserting portion extending along a first axis and a receiving portion extending along a second axis inclined to the first axis. The method includes movably and at least partially receiving a locking member in an opening of the orthodontic appliance, such that the locking member is normally biased to a locked state. In the locked state, the locking member at least partially extends into the inserting portion of the slot. The method further includes inserting the archwire into the inserting portion of the slot, such that the archwire engages the locking member and moves the locking member from the locked state into the opening along the first axis. The method further includes inserting the archwire into the receiving portion of the slot, such that the locking member is biased to the locked state and removably retains the archwire within the receiving portion of the slot.

Brief Description of the Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.

FIG. 1 is a schematic perspective view of an orthodontic system according to one embodiment of the present disclosure;
FIG. 2A is a schematic perspective view of an orthodontic appliance according to one embodiment of the present disclosure;
FIG. 2B is a schematic side view of the orthodontic appliance according to one embodiment of the present disclosure;
FIG. 3A is a schematic perspective view of the orthodontic appliance according to one embodiment of the present disclosure;
FIG. 3B is a schematic perspective view of the orthodontic appliance with a cap portion and a locking member not shown according to one embodiment of the present disclosure;
FIGS. 4A-4D are schematic perspective views of the orthodontic appliance in different functional stages with the cap portion not shown according to one embodiment of the present disclosure;
FIGS. 5A-5D are schematic perspective views of the orthodontic appliance in different functional stages according to one embodiment of the present disclosure;
FIG. 6 is a schematic front view of the orthodontic appliance with the cap portion not shown according to one embodiment of the present disclosure;
FIGS. 7A and 7B are schematic perspective views of the orthodontic appliance with the locking member not shown according to one embodiment of the present disclosure;
FIG. 8A is a schematic perspective view of an orthodontic appliance according to one embodiment of the present disclosure;
FIG. 8B is a schematic perspective view of the orthodontic appliance with a cap portion not shown according to one embodiment of the present disclosure;
FIG. 8C is a perspective view of a locking member of the orthodontic appliance according to one embodiment of the present disclosure;
FIGS. 9A-9D are schematic perspective views of the orthodontic appliance in different functional stages with the cap portion not shown according to one embodiment of the present disclosure;
FIGS. 10A and 10B are schematic perspective views of an orthodontic appliance with a cap portion not shown according to one embodiment of the present disclosure; and
FIGS. 11A-11D are schematic perspective views of the orthodontic appliance in different functional stages with the cap portion not shown according to one embodiment of the present disclosure;
FIG. 12 is a flowchart illustrating various steps of a method for use with an archwire and an orthodontic appliance according to one embodiment of the present disclosure.

**Detailed Description**

In the following description, reference is made to the accompanying figures that form a part thereof and in which various embodiments are shown by way of illustration. It is to be understood that other embodiments are contemplated and may be made without departing from the scope of the present disclosure. The following detailed description, therefore, is not to be taken in a limiting sense.

The present disclosure relates to an orthodontic appliance for removably receiving an archwire. The present disclosure further relates to an orthodontic system for a plurality of teeth and including a plurality of orthodontic appliances. The present disclosure further relates to a method for use with an archwire and an orthodontic appliance. The orthodontic appliance may be used in orthodontic treatments for moving one or more teeth of a patient from a malposition to a desired position in a dentition of the patient.

The orthodontic appliance includes a body defining a slot. The slot includes an inserting portion. The inserting portion includes an open end. The inserting portion extends along a first axis from the open end. The inserting portion is configured to removably receive the archwire therein through the open end. The slot further includes a receiving portion spaced apart from the open end and communicating with the inserting portion. The receiving portion extends along a second axis inclined to the first axis by an inclination angle. The body further defines an opening communicating with the inserting portion of the slot and spaced apart from the receiving portion of the slot. The orthodontic appliance further includes a locking member at least partially and movably received within the opening. The locking member is movable at least along the first axis between a locked state and an unlocked state. The locking member is normally biased to the locked state and movable to the unlocked state. In the locked state, the locking member at least partially extends into the inserting portion of the slot. In the unlocked state, the locking member is displaced from the locked state into the opening along the first axis. Upon application of an external force, the locking member is movable to the unlocked state to allow movement of the archwire between the inserting portion and the receiving portion. Furthermore, upon removal of the external force, the locking member is movable to the locked state to removably retain the archwire within the receiving portion of the slot.

Conventional self-ligating brackets used for orthodontic treatments typically have a complicated design and have a large footprint or profile. This may increase chair-time and treatment complexity. Further, conventional self-ligating brackets may be unsuitable for certain applications.

The orthodontic appliance of the present disclosure may allow tool-less ligation of the archwire to the orthodontic appliance. Specifically, the archwire may be inserted through the open end of the inserting portion and removably retained within the receiving portion of the slot without a need of extra tools. Therefore, the orthodontic appliance may reduce a chair-time of the patient during dental treatments. Furthermore, the orthodontic appliance may have a robust design as the locking member reliably secures the archwire to the orthodontic appliance. Therefore, the orthodontic appliance may be less prone to failure. Moreover, the combination of the slot including the inserting portion and the receiving portion, and the locking member that is normally biased to the locked state may enable the orthodontic appliance of the present disclosure to have a simpler design and a lower profile as compared to conventional self-ligating brackets. Therefore, the orthodontic appliance may be suitable for orthodontic treatments requiring low profile orthodontic appliances.

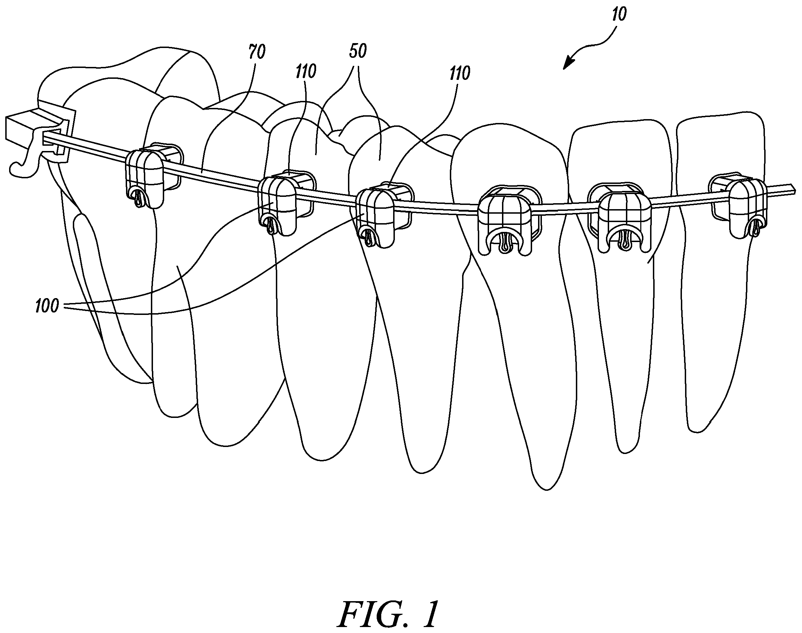

Referring now to the Figures, FIG. 1 illustrates an orthodontic system 10 for a plurality of teeth 50 according to an embodiment of the present disclosure. The plurality of teeth 50 may be of a patient undergoing an orthodontic treatment. The plurality of teeth 50 may include one or more of a central incisor, a lateral incisor, a canine, a premolar, a first molar, a second molar, and a third molar. Furthermore, the plurality of teeth 50 may be of a lower dental arch or an upper dental arch of the patient.

The orthodontic system 10 includes an archwire 70. The archwire 70 may be configured to apply forces on the plurality of teeth 50 to move one or more teeth 50 from a malposition to a desired position in a dentition of the patient. In some embodiments, the archwire 70 may include a nickel-titanium (NiTi) alloy. In some other embodiments, the archwire 70 may include any suitable material for applying forces on the plurality of teeth 50. For example, the archwire 70 may include a metal, a metal alloy, a non-metal alloy, a composite, and combinations thereof.

The orthodontic system 10 further includes a plurality of orthodontic appliances 100. At least one orthodontic appliance 100 from the plurality of orthodontic appliances 100 may be a self-ligating orthodontic appliance. The at least one orthodontic appliance 100 includes a body 110. The at least one orthodontic appliance 100 from the plurality of orthodontic appliances 100 is configured to at least partially and removably receive the archwire 70 therein. Further, the at least one orthodontic appliance 100 is configured to be detachably coupled to a corresponding tooth 50 from the plurality of teeth 50.

The at least one orthodontic appliance 100 is detachably coupled to the corresponding tooth 50 on a labial surface of the corresponding tooth 50, i.e., a tooth surface toward lips of the patient. In the illustrated embodiment of FIG. 1, each orthodontic appliance 100 is a labial orthodontic appliance. However, in some other embodiments, the at least one orthodontic appliance 100 may be detachably coupled to the corresponding tooth 50 on a lingual surface of the corresponding tooth 50, i.e., a tooth surface toward a tongue of the patient. In other words, the at least one orthodontic appliance 100 may be a lingual orthodontic appliance.

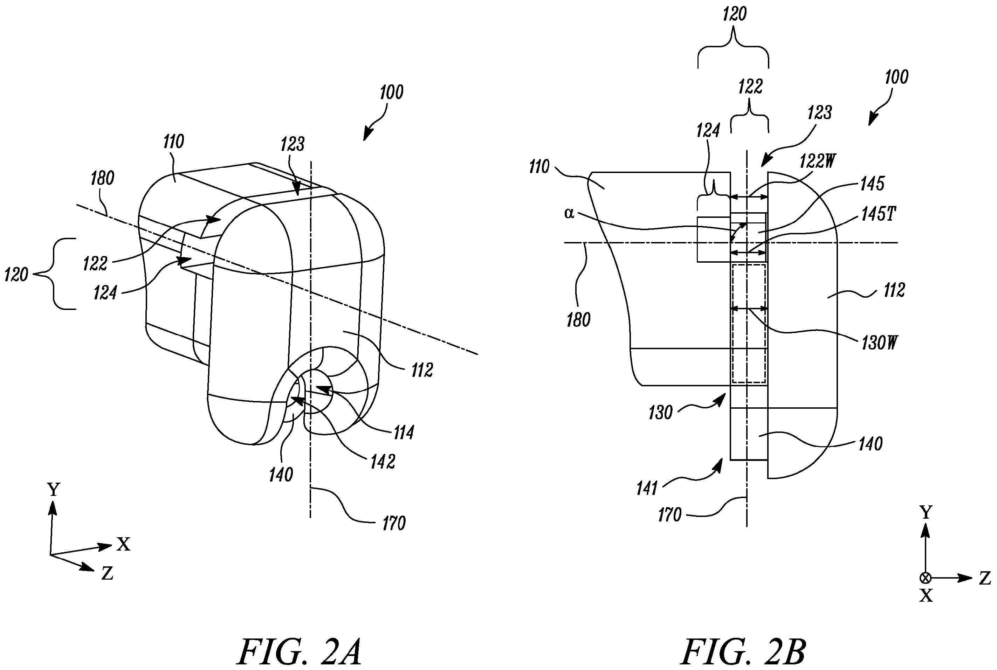

FIG. 2A illustrates a perspective view of the orthodontic appliance 100 according to an embodiment of the present disclosure. FIG. 2B illustrates a side view of the orthodontic appliance 100. The orthodontic appliance 100 defines mutually orthogonal X, Y and Z-axes. The X and Y-axes are in-plane axes of the orthodontic appliance 100, while the Z-axis is a transverse axis disposed along a thickness of the orthodontic appliance 100. In other words, the X and Y-axes are disposed along a plane of the orthodontic appliance 100, while the Z-axis is perpendicular to the plane of the orthodontic appliance 100.

Referring to FIGS. 2A and 2B, the orthodontic appliance 100 includes the body 110. In the illustrated embodiment of FIGS. 2A and 2B, the body 110 includes a cap portion 112. The body 110 may further include a base portion (not shown) disposed opposite to the cap portion 112 along the Z-axis. The base portion of the body 110 may be configured to be detachably coupled to the corresponding tooth 50 (shown in FIG. 1). In some embodiments, the base portion of the body 110 may be custommade for the corresponding tooth 50 (shown in FIG. 1) of the patient. The body 110 may be made of any suitable material and by any suitable manufacturing process. For example, in some embodiments, the body 110 may be made of a metal alloy by additive manufacturing process. In some embodiments, the body 110 may be manufactured as a single part. In some other embodiments, different parts of the body 110 may be manufactured separately, and then assembled together by a suitable process. For example, the cap portion 112 and the base portion (not shown) may be manufactured separately, and then attached (e.g., by laser welding) to each other to form the body 110.

The body 110 defines a slot 120. The slot 120 may be configured to removably receive and retain the archwire 70 (shown in FIG. 1) therein. Specifically, the slot 120 is open from lateral ends of the body 110, such that the slot 120 may removably retain the archwire 70 therein. In the illustrated embodiment of FIGS. 2A and 2B, the cap portion 112 of the body 110 may at least partially define the slot 120. The slot 120 includes an inserting portion 122 and a receiving portion 124.

The inserting portion 122 includes an open end 123. The inserting portion 122 extends along a first axis 170 from the open end 123. In the illustrated embodiment of FIGS. 2A and 2B, the first axis 170 is substantially aligned with the Y-axis. Therefore, the inserting portion 122 extends substantially along the Y-axis from the open end 123. The inserting portion 122 is configured to removably receive the archwire 70 (shown in FIG. 1) therein through the open end 123.

The receiving portion 124 is spaced apart from the open end 123. In some embodiments, the receiving portion 124 may be spaced apart from the open end 123 by a distance along the first axis 170. The receiving portion 124 communicates with the inserting portion 122. In other words, the archwire 70 (shown in FIG. 1) may be movable between the inserting portion 122 and the receiving portion 124 of the slot 120. The receiving portion 124 extends along a second axis 180 inclined to the first axis 170 by an inclination angle α (shown in FIG. 2B). In the illustrated embodiment of FIGS. 2A and 2B, the second axis 180 is substantially aligned with the Z-axis. Therefore, the receiving portion 124 extends substantially along the Z-axis.

Furthermore, in the illustrated embodiment of FIGS. 2A and 2B, the inclination angle α is about 90 degrees. Therefore, the slot 120 may have a general "L" shape along a plane formed by the first and second axes 170, 180. In other words, the slot 120 may have the general "L" shape along the Y-Z plane. However, in some other embodiments, the inclination angle α is from about 70 degrees to about 110 degrees.

In some other embodiments, the first and second axes 170, 180 may be curved. In such embodiments, tangents to the first and second axes 170, 180 at an intersecting point of the first and second axes 170, 180 define the inclination angle α. Further, in such embodiments, the inclination angle α may range from about 50 degrees to about 130 degrees.

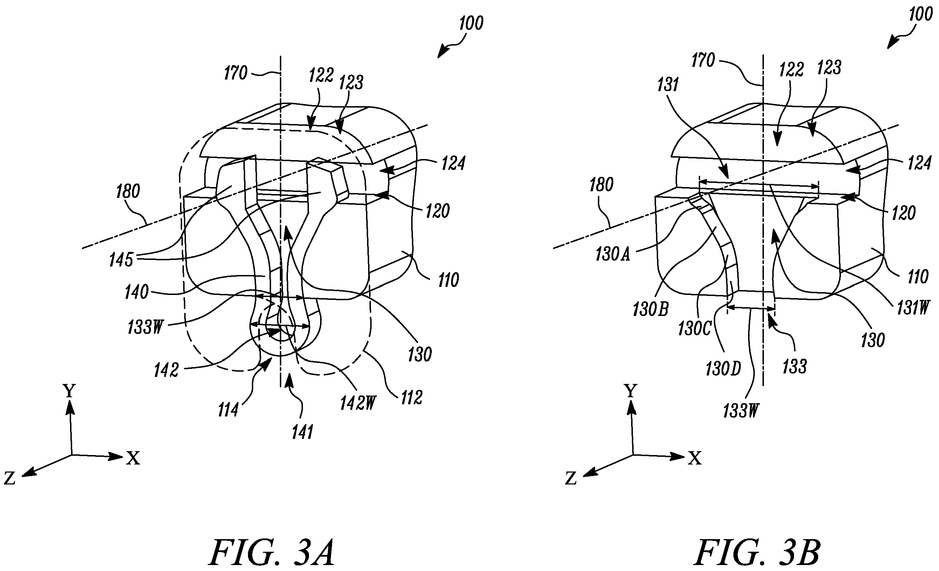

The orthodontic appliance 100 further includes a locking member 140. In other words, the at least one orthodontic appliance 100 further includes the locking member 140. The locking member 140 will be described later in detail with additional reference to FIG. 3A.

FIG. 3A illustrates a perspective view of the orthodontic appliance 100. In FIG. 3A, the cap portion 112 of the body 110 is shown as transparent and by dashed lines. FIG. 3B illustrates a perspective view of the orthodontic appliance 100 with each of the cap portion 112 and the locking member 140 removed.

Referring to FIGS. 2A, 2B, 3A and 3B, the body 110 further defines an opening 130. The opening 130 communicates with the inserting portion 122 of the slot 120. As shown in FIG. 2B, the opening 130 is spaced apart from the receiving portion 124 of the slot 120. The opening 130 may be spaced apart from the receiving portion 124 along the second axis 180. The opening 130 is indicated by dashed lines in FIG. 2B.

Furthermore, as shown in FIG. 2B, in some embodiments, a width 130W of the opening 130 is equal to a width 122W of the inserting portion 122. In some embodiments, the width 130W of the opening 130 is less than or equal to the width 122W of the inserting portion 122. The width 130W of the opening 130 and the width 122W of the inserting portion 122 may be along the second axis 180. In the illustrated embodiment of FIG. 2B, the second axis 180 is substantially aligned with the Z-axis. Therefore, the width 130W of the opening 130 and the width 122W of the inserting portion 122 may be substantially along the Z-axis.

In the illustrated embodiment of FIGS. 2A, 2B, 3A and 3B, the opening 130 includes a first end 131 (shown in FIG. 3B) proximal to the inserting portion 122 of the slot 120. The first end 131 has a width 131W. The opening 130 further includes a second end 133 (shown in FIG. 3B) opposite to the first end 131. The second end 133 has a width 133W. The widths 131W, 133W of the first and second ends 131, 133, respectively, may be along an axis orthogonal to each of the first and second axes 170, 180. In the illustrated embodiment of FIG. 3B, the widths 131W, 133W of the first and second ends 131, 133 may be substantially along the X-axis.

In some embodiments, the opening 130 tapers from the inserting portion 122 of the slot 120. Specifically, the opening 130 tapers from the first end 131 adjacent to the inserting portion 122 to the second end 133. As shown in FIG. 3B, in some embodiments, the opening 130 may include a pair of opposing first portions 130A, a pair of opposing second portions 130B, a pair of opposing third portions 130C, and a pair of opposing fourth portions 130D. The opening 130 may have different widths along the X-axis corresponding to the different portions 130A, 130B, 130C, 130D. The first portions 130A of the opening 130 define a first average width therebetween. The second portions 130B of the opening 130 define a second average width therebetween. The third portions 130C of the opening 130 define a third average width therebetween. The fourth portions 130D of the opening 130 define a fourth average width therebetween. In some embodiments, as shown in FIG. 3B, a width of the opening 130 along the X-axis may decrease monotonically from the first end 131 of the opening 130 to the second end 133 of the opening 130. In some embodiments, the first, second and third average widths between the first, second, and third portions 130A, 130B, 130C may be greater than the second, third and fourth average widths between the second, third and fourth portions 130B, 130C, 130D, respectively, along the X-axis. Specifically, the first average width between the first portions 130A is greater than the second average width between the second portions 130B. Further, the second average width between the second portions 130B is greater than the third average width between the third portions 130C. Moreover, the third average width between the third portions 130C is greater than the fourth average width between the fourth portions 130D.

In some embodiments, each of the first, second, third and fourth portions 130A, 130B, 130C, 130D of the opening 130 may have a different taper slope. In the illustrated embodiment of FIG. 3B, each of the first portions 130A has a first taper slope. Each of the second portions 130B has a second taper slope. The first taper slope is greater than the second taper slope. Similarly, each of the third portions 130C has a third taper slope and each of the fourth portions 130D has a fourth taper slope. The second taper slope of the second portion 130B is greater than the third taper slope of the third portion 130C, and the third taper slope of the third portion 130C is greater than the fourth taper slope of the fourth portion 130D.

However, the opening 130 may have a different configuration, as per desired application attributes. In some embodiments, the configuration of the opening 130 may depend on the locking member 140.

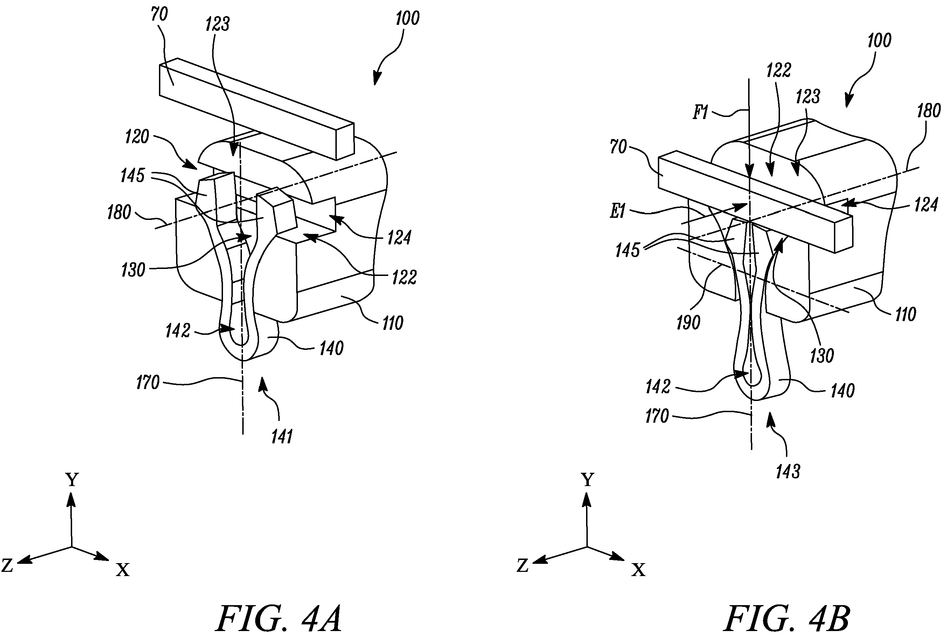

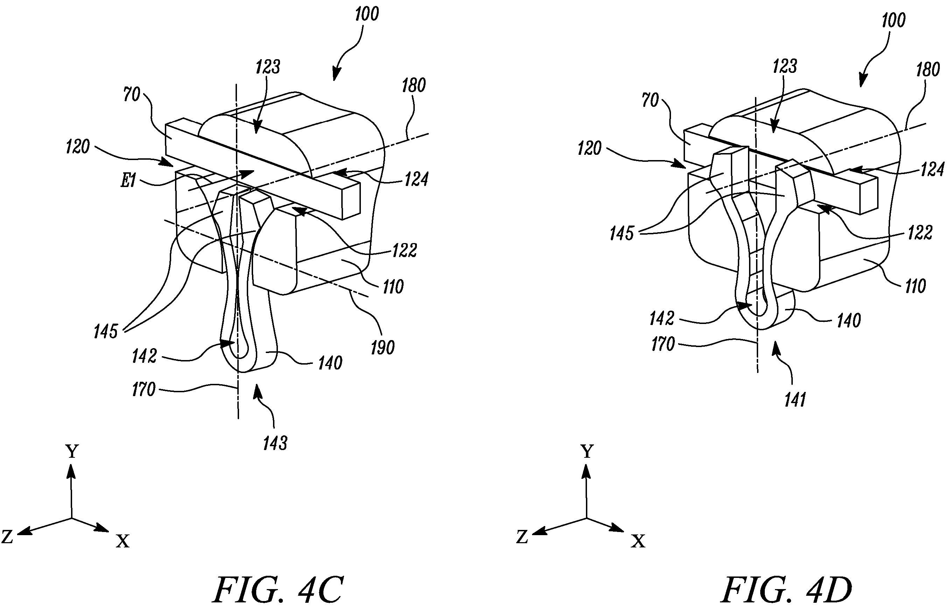

The locking member 140 is at least partially and movably received within the opening 130. That is, the locking member 140 is movable at least along the first axis 170 between a locked state 141 (shown in FIGS. 2B and 3A) and an unlocked state 143 (shown in FIG. 4B). As shown in FIGS. 2B and 3A, the locking member 140 is normally biased to the locked state 141 and is movable to the unlocked state 143. In the locked state 141, the locking member 140 at least partially extends into the inserting portion 122 of the slot 120. The locking member 140 may "block" or removably retain the archwire 70 (shown in FIG. 4D) within the receiving portion 124 of the slot 120 in the locked state 141. Further, in the unlocked state 143 (shown in FIG. 4B), the locking member 140 is displaced from the locked state 141 into the opening 130 along the first axis 170. In some embodiments, the locking member 140 engages the body 110 in each of the locked state 141 and the unlocked state 143. Specifically, the locking member 140 may engage a surface of the cap portion 112 of the body 110 in each of the locked state 141 and the unlocked state 143. Therefore, the locking member 140 may only experience compression forces exerted by the archwire 70 (shown in FIG. 1). In other words, the locking member 140 may not experience bending forces exerted by the archwire 70. Hence, the locking member 140 may not deform accidentally during use of the orthodontic appliance 100, and therefore provide robust locking of the archwire 70.

In the illustrated embodiment of FIGS. 2A-2B to 3A-3B, the locking member 140 includes a V-shaped clip. Specifically, the locking member 140 includes a pair of resilient arms 145 connected to each other. In some embodiments, the resilient arms 145 may provide a biasing force to the locking member 140. The biasing force provided by the resilient arms may normally bias the locking member 140 to the locked state 141. In the locked state 141, each resilient arm 145 at least partially extends into the inserting portion 122 of the slot 120. As shown in FIG. 2B, in some embodiments, a maximum thickness 145T of each resilient arm 145 is less than or equal to the width 122W of the inserting portion 122 of the slot 120. In some embodiments, the maximum thickness 145T and the width 122W may be along the second axis 180. Therefore, the maximum thickness 145T of each resilient arm 145 and the width 122W of the inserting portion 122 may be substantially along the Z-axis.

In some embodiments, the locking member 140 defines an eyelet 142. As shown in FIGS. 2A and 3A, in some embodiments, the body 110 further defines a cavity 114. Specifically, the cap portion 112 of the body 110 defines the cavity 114. The cavity 114 is disposed in communication with the eyelet 142 in the locked state 141 of the locking member 140. Furthermore, in the illustrated embodiment of FIGS. 2A-3B, the eyelet 142 is disposed outside of the opening 130 proximal to the second end 133. In some embodiments, a maximum width 142W (shown in FIG. 3A) of the eyelet 142 is greater than the width 133W of the second end 133 of the opening 130. In the illustrated embodiment of FIG. 3A, the maximum width 142W and the width 133W may be substantially along the X-axis.

The locking member 140 may be secured to the orthodontic appliance 100 once the locking member 140 is received within the opening 130. In other words, the locking member 140 may not accidently get removed from the orthodontic appliance 100. Specifically, the locking member 140 may be secured to the orthodontic appliance 100 since the maximum width 142W of the eyelet 142 may be greater than the width 133W of the second end 133 of the opening 130. The eyelet 142 may therefore prevent the locking member 140 to be slidably removed from the opening 130 through the first end 131. In other words, the eyelet 142 may prevent the locking member 140 to be slidably removed from the opening 130 along a direction from the second end 133 to the first end 131. Further, the width 133W of the second end 133 of the opening 130 may depend on the maximum width 142W of the eyelet 142. Specifically, the width 133W of the second end 133 may be adjusted such that the eyelet 142 is insertable through the first end 131 of the opening 130 along the first axis 170 by deforming the eyelet 142 within elastic limits of a material of the locking member 140.

In some embodiments, the locking member 140 includes a super elastic metal. For example, the locking member 140 may include shape memory alloys. Examples of suitable shape memory alloys may include, but are not limited to, titanium and its alloys, nickel titanium alloy (NiTi), copper nickel titanium alloys, cobalt chromium alloy, heat treated stainless steel, and the like. However, in some other embodiments, the locking member 140 may include elastic materials, such as plastic, silicone and various combinations of elastic materials and metals.

During assembly of the orthodontic appliance 100, the eyelet 142 may be compressed such that the maximum width 142W of the eyelet 142 becomes less than the width 133W of the second end 133 of the opening 130. After compression, the locking member 140 may be at least partially and movably received in the opening 130. Specifically, the eyelet 142 may be inserted through the first end 131 of the opening 130, such that the eyelet 142 is disposed outside of the opening 130 proximal to the second end 133 of the opening 130.

In embodiments of the locking member 140 including NiTi, the compression of the eyelet 142 may be assisted by cooling down the locking member 140 to soften the NiTi. Furthermore, after at least partially and movably receiving the locking member 140 in the opening 130, a temperature of the NiTi may rise to operational temperatures, and the maximum width 142W of the eyelet 142 may become greater than the width 133W of the second end 133 of the opening 130. Similarly, a combined maximum width of the resilient arms 145 of the locking member 140 in the unlocked state 143 (shown in FIG. 4C) may be greater than the width 133W of the second end 133 of the opening 130. The resilient arms 145 may therefore prevent the locking member 140 to be slidably removed from the opening 130 through the second end 133. In other words, the resilient arms 145 may prevent the locking member 140 to be slidably removed from the opening 130 along a direction from the first end 131 to the second end 133. Therefore, the locking member 140 may not accidentally get removed from the orthodontic appliance 100 once the locking member 140 is received within the orthodontic appliance 100. Specifically, the locking member 140 may not accidentally get removed from the orthodontic appliance 100 once the locking member 140 is received within the opening 130.

FIGS. 4A-4D illustrate the archwire 70 and the orthodontic appliance 100. Specifically, FIGS. 4A-4D illustrate various steps for use with the archwire 70 and the orthodontic appliance 100, according to an embodiment of the present disclosure. More specifically, FIGS. 4A-4C illustrate the various steps for removably retaining the archwire 70 within the receiving portion 124 of the orthodontic appliance 100. The cap portion 112 of the body 110 is not shown in FIGS. 4A-4C for illustrative purposes.

Referring to FIGS. 4A and 4D, the locking member 140 is normally biased to the locked state 141. As shown in FIG. 4A, in the locked state 141, the locking member 140 at least partially extends into the inserting portion 122 of the slot 120. Specifically, in the illustrated embodiment of FIGS. 4A-4C, in the locked state 141, each resilient arm 145 at least partially extends into the inserting portion 122 of the slot 120. The inserting portion 122 is configured to removably receive the archwire 70 therein through the open end 123. In other words, the archwire 70 may be inserted through the open end 123 of the inserting portion 122.

As shown in FIG. 4B, an external force F1 is applied by the archwire 70 during insertion of the archwire 70 into the inserting portion 122 of the slot 120. However, in some other embodiments, the external force F1 may be applied by other means (e.g., by pulling down the eyelet 142). In some embodiments, the external force F1 may be substantially along the first axis 170. In the illustrated embodiment of FIG. 4A, the first axis 170 is substantially aligned with the Y-axis. Therefore, the external force F1 may be substantially along the Y-axis. The external force F1 may be applied on the locking member 140 via the archwire 70.

Upon application of the external force F1, the locking member 140 is movable to the unlocked state 143 to allow movement of the archwire 70 between the inserting portion 122 and the receiving portion 124. The external force F1 may have a sufficient magnitude to move the locking member 140 to the unlocked state 143. Therefore, the locking member 140 moves to the unlocked state 143 upon application of the external force F1. Further, in the unlocked state 143, the locking member 140 is displaced from the locked state 141 (shown in FIG. 4A) into the opening 130 along the first axis 170. In the illustrated embodiment of FIG. 4B, in the unlocked state 143, each resilient arm 145 at least partially retracts into the opening 130. Specifically, upon application of the external force F1, the locking member 140 moves along the first axis 170 relative to the opening 130, such that each resilient arm 145 of the locking member 140 resiliently moves along a third axis 190. The third axis 190 is substantially orthogonal to each of the first and second axes 170, 180. In the illustrated embodiment of FIG. 4B, the third axis 190 is substantially aligned with the X-axis. Therefore, each resilient arm 145 of the locking member 140 resiliently moves along the X-axis. Furthermore, a force E1 may be applied on the locking member 140 after application of the external force F1 on the locking member 140.

As shown in FIG. 4C, the force E1 may be applied to the archwire 70 to move the archwire 70 from the inserting portion 122 of the slot 120 to the receiving portion 124 of the slot 120. In some embodiments, the force E1 may be substantially along the second axis 180. For example, the force E1 may be applied to the archwire 70 by a dentist practitioner.

As shown in FIG. 4D, the archwire 70 is inserted into the receiving portion 124 of the slot 120. By inserting the archwire 70 into the receiving portion 124 of the slot 120, the external force F1 (shown in FIG. 4B) applied by the archwire 70 on the locking member 140 may be removed. After removal of the external force F1, the locking member 140 is biased to the locked state 141 and removably retains the archwire 70 within the receiving portion 124 of the slot 120. Specifically, upon removal of the external force F1, the locking member 140 is movable to the locked state 141 to removably retain the archwire 70 within the receiving portion 124 of the slot 120. In some embodiments, upon removal of the external force F1, the locking member 140 is retained in the unlocked state 143 (shown in FIG. 4C). The locking member 140 may be retained in the unlocked state 143 due to friction between the resilient arms 145 of the locking member 140 and the body 110. In some embodiments, the locking member 140 may be retained in the unlocked state 143 by incorporating notches, and the like, on the body 110. Therefore, another external force may be required to overcome the frictional force and move the locking member 140 from the unlocked state 143 to the locked state 141.

In some other embodiments, upon removal of the external force F1, the locking member 140 moves to the locked state 141 to removably retain the archwire 70 within the receiving portion 124 of the slot 120. More specifically, upon removal of the external force F1, the resilient arms 145 of the locking member 140 are biased to move to the locked state 141. The resilient arms 145 may removably retain the archwire 70 within the receiving portion 124 of the slot 120. In some cases, the resilient arms 145 may engage the archwire 70 in the locked state 141 to prevent the archwire 70 from being slidably removed from the receiving portion 124 of the slot 120. In some embodiments, a portion of the locking member 140 extending into the inserting portion 122 and adjacent to the receiving portion 124 may be chamfered and include chamfered edges. The chamfered edges may ease insertion and removal of the archwire 70 into and from the receiving portion 124.

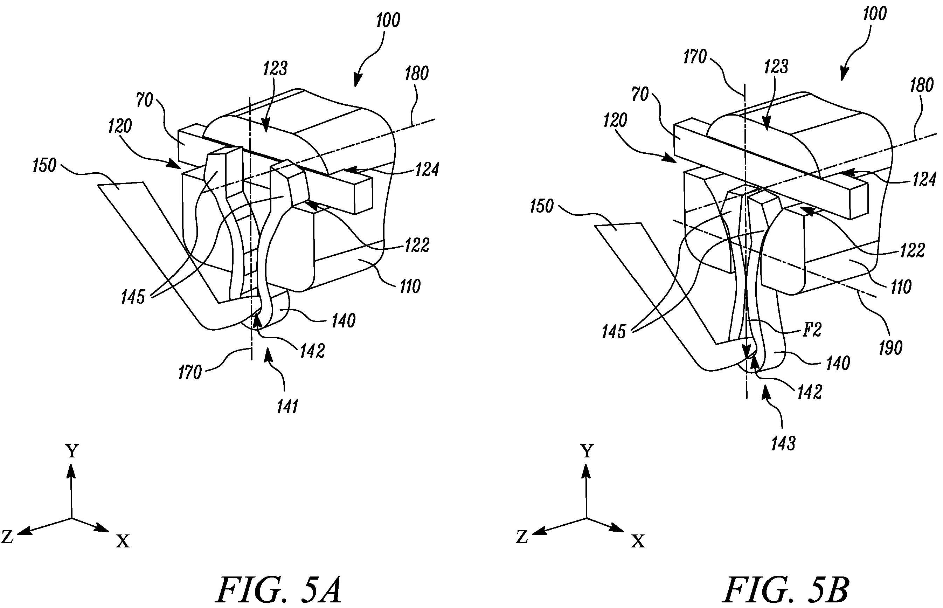

FIGS. 5A-5D illustrate the archwire 70 and the orthodontic appliance 100. Specifically, FIGS. 5A-5D illustrate various steps for use with the archwire 70 and the orthodontic appliance 100, according to an embodiment of the present disclosure. More specifically, FIGS. 5A-5D illustrate the various steps for removing the archwire 70 from the receiving portion 124 of the orthodontic appliance 100. The cap portion 112 of the body 110 is not shown in FIGS. 5A-5C for illustrative purposes.

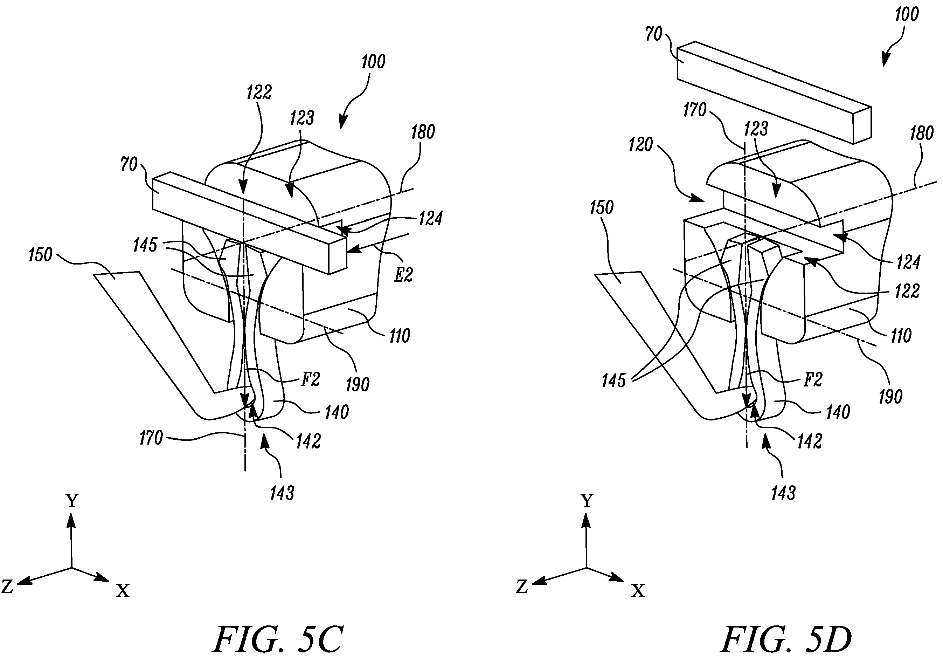

Referring to FIGS. 5A and 5D, the locking member 140 is normally biased to the locked state 141. As shown in FIG. 5A, a tool 150 is at least partially inserted into the eyelet 142. In some embodiments, the tool 150 may include a probe. However, the tool 150 may include any orthodontic tool that has at least one end suitable to be at least partially inserted into the eyelet 142 of the locking member 140. Insertion of the tool 150 into the eyelet 142 of the locking member 140 may be guided by a shape of the cavity 114 of the cap portion 112 (shown in FIG. 2A).

As shown in FIG. 5B, an external force F2 is applied by the tool 150 that is at least partially inserted into the eyelet 142 through the cavity 114. As discussed above, upon application of an external force (e.g., the external force F2) having a sufficient magnitude, the locking member 140 is movable to the unlocked state 143 to allow movement of the archwire 70 between the inserting portion 122 and the receiving portion 124. In the illustrated embodiment, upon application of the external force F2, the locking member 140 is movable to the unlocked state 143 to allow movement of the archwire 70 between the inserting portion 122 and the receiving portion 124 of the slot 120. Therefore, the locking member 140 is moved to the unlocked state 143 upon application of the external force F2 by the tool 150. As shown in FIGS. 5B-5C, the locking member 140 may be kept in the unlocked state 143 by continuously applying the external force F2 by the tool 150.

As shown in FIG. 5C, in the unlocked state 143 of the locking member 140, the archwire 70 may be moved from the receiving portion 124 to the inserting portion 122 of the slot 120 by application of a force E2. The force E2 may be applied to the archwire 70 to move the archwire 70 from the receiving portion 124 of the slot 120 to the inserting portion 122 of the slot 120. In some embodiments, the force E2 may be along the second axis 180. For example, the force E2 may be applied to the archwire 70 by a dentist practitioner while continuously applying the external force F2 by the tool 150 inserted into the eyelet 142.

As shown in FIG. 5D, the archwire 70 may then be removed from the inserting portion 122 of the slot 120 through the open end 123 of the inserting portion 122. After removal of the archwire 70 through the open end 123, the tool 150 may be removed from the eyelet 142.

That is, the external force F2 may be removed from the locking member 140. After removal of the external force F2 applied by the tool 150, the locking member 140 is biased to the locked state 141 (as shown in FIG. 3A).

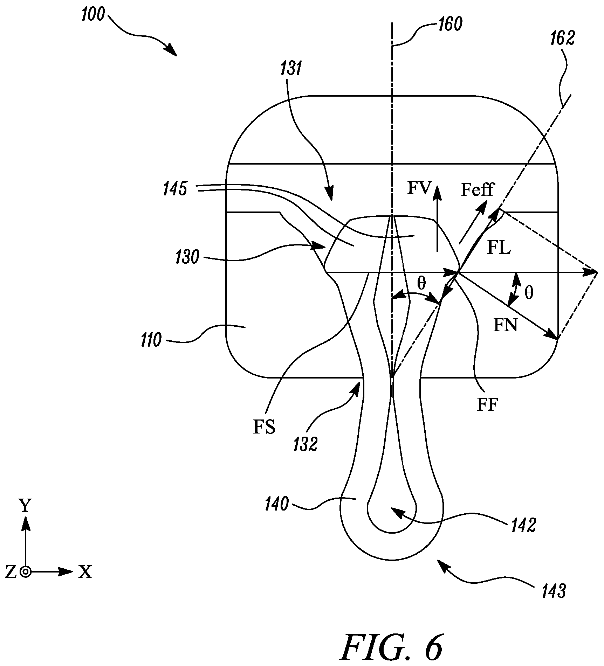

FIG. 6 illustrates a front view of the orthodontic appliance 100 with the cap portion 112 removed. As discussed above, the opening 130 tapers from the inserting portion 122 of the slot 120. A taper of the opening 130 may be substantially symmetrical about a center axis 160 In some embodiments, the center axis 160 may be substantially along the first axis 170 (shown in FIG. 3A). An average taper of the opening 130 is illustrated by a taper axis 162.

A design of the opening 130 and the locking member 140 may depend on various design parameters. The design parameters may include a coefficient of friction μ between the locking member 140 and the body 110. The design parameters may further include an opening angle θ of the opening 130. The opening angle θ may be a half angle. The opening angle θ may be defined between the center axis 160 and the taper axis 162. The design parameters may further include a spring force FS applied by the locking member 140 against a section of the body 110 corresponding to the opening 130.

Referring to FIG. 6, the locking member 140 is illustrated in the unlocked state 143. The resilient arms 145 of the locking member 140 apply the spring force FS against the section of the body 110 corresponding to the opening 130. For the opening angle θ ranging between 0 degrees to 90 degrees, a normal force FN applied by resilient arms 145 on the body 110 may be calculated by the following equation:

$$FN = FS * \cos \theta$$

A lifting force FL provided by the resilient arms 145 along the taper axis 162 may be calculated by the following equation:

$$FL = FS * \sin \theta$$

A friction force FF applied against the lifting force FL, and the movement of the locking member 140 from the unlocked state 143 to the locked state 141 may be calculated by the following equation:

$$FF = \mu * FN$$

Therefore, an effective force Feff provided by the resilient arms 145 may be calculated by the following equation:

$$Feff = FL - FF$$

Substituting the expressions of the lifting force FL and the friction force FF from equations provided above,

$$Feff = (FS * \sin \theta) - \mu * (FS * \cos \theta)$$

The effective force Feff provided by the resilient arms 145 may need to be positive in order to allow the locking member 140 to be biased to the locked state 141 (shown in FIG. 4C). That is, the lifting force FL may need to be greater than the friction force FF (FL > FF).

Furthermore, a vertical force FV provided by the resilient arms 145 due to the spring force FS may be calculated by the following equation:

$$FV = Feff * \cos \theta$$

Substituting the expression of the effective force Feff from the equation provided above,

$$FV = FS * (\sin \theta - \mu * \cos \theta) * \cos \theta$$

As discussed above, the effective force Feff may need to be positive (for the vertical force Fv to be positive). Therefore,

$$(Fs * \sin \theta) \geq (\mu * Fs * \cos \theta)$$

Which implies,

$$\sin \theta \geq \mu * \cos \theta$$

Or,

$$\tan \theta \geq \mu$$

Therefore, a material of the locking member 140 may be selected according to the coefficient of friction μ to satisfy the above provided equation. Furthermore, the width of the opening 130 along the third axis 190 may be adjusted to adjust the opening angle θ. With an increase in the coefficient of friction μ, the opening angle θ may need to be increased, i.e., the width 131W (shown in FIG. 3B) of the first end 131 of the opening 130 may need to be increased.

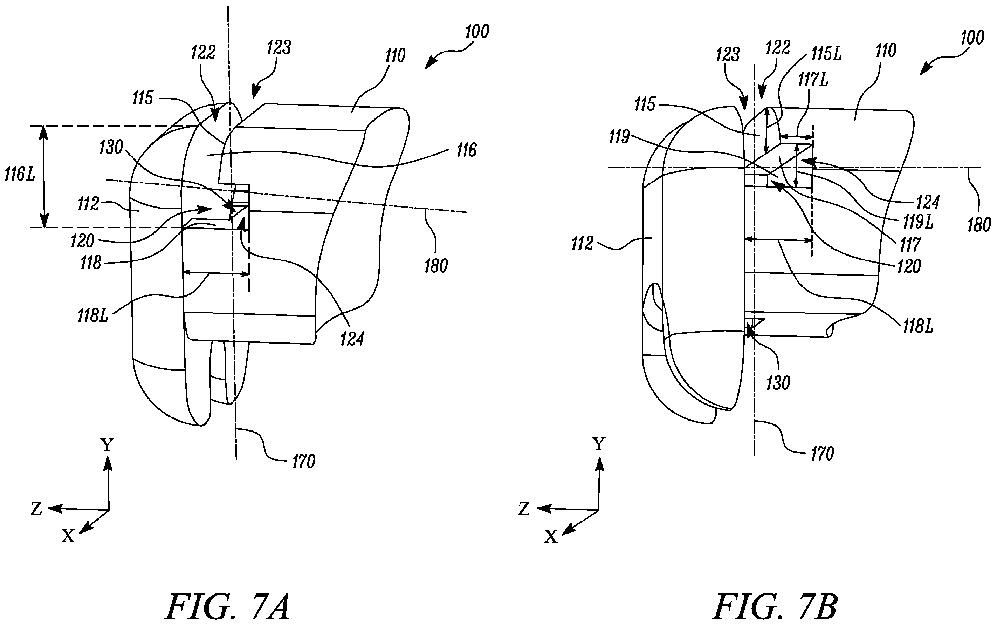

FIGS. 7A and 7B illustrate perspective views of the body 110 without the locking member 140. In the illustrated embodiment of FIGS. 7A and 7B, the body 110 further includes a first surface 115 and a second surface 116 opposing the first surface 115. The second surface 116 may be defined on the cap portion 112 of the body 110. In some embodiments, the first and second surfaces 115, 116 at least partially define the inserting portion 122 of the slot 120 therebetween. In the illustrated embodiment of FIGS. 7A and 7B, a maximum length 115L of the first surface 115 along the first axis 170 is less than a maximum length 116L of the second surface 116 along the first axis 170.

In the illustrated embodiment of FIGS. 7A and 7B, the body 110 further includes a third surface 117, a fourth surface 118, and a fifth surface 119. The third surface 117 is disposed adjacent to and inclined to the first surface 115. In the illustrated embodiment of FIGS. 7A and 7B, the third surface 117 is inclined to the first surface 115 by about 90 degrees. However, in some embodiments, the third surface 117 may be inclined to the first surface 115 by about 70 degrees to about 110 degrees. The fourth surface 118 is disposed adjacent to and inclined to the second surface 116. The fourth surface 118 is disposed opposite to the third surface 117. In the illustrated embodiment of FIGS. 7A and 7B, the fourth surface 118 is inclined to the second surface 116 by about 90 degrees. However, in some embodiments, the fourth surface 118 may be inclined to the second surface 116 by about 70 degrees to about 110 degrees.

In the illustrated embodiment of FIGS. 7A and 7B, a maximum length 117L of the third surface 117 along the second axis 180 is less than a maximum length 118L of the fourth surface 118 along the second axis 180.

In the illustrated embodiment of FIGS. 7A and 7B, the opening 130 extends from the fourth surface 118. Specifically, the opening 130 extends from the fourth surface 118 along the first axis 170.

Furthermore, in the illustrated embodiment of FIGS. 7A and 7B, the fifth surface 119 extends between the third surface 117 and the fourth surface 118. In some embodiments, the third, fourth and fifth surfaces 117, 118, 119 at least partially define the receiving portion 124 of the slot 120 therebetween. In the illustrated embodiment of FIGS. 7A and 7B, a maximum length 119L of the fifth surface 119 along the first axis 170 is less than the maximum length 116L of the second surface 116 along the first axis 170. In some embodiments, as shown in FIGS. 7A and 7B, each of the first, second, third and fourth surfaces 115, 116, 117, 118 is substantially planar.

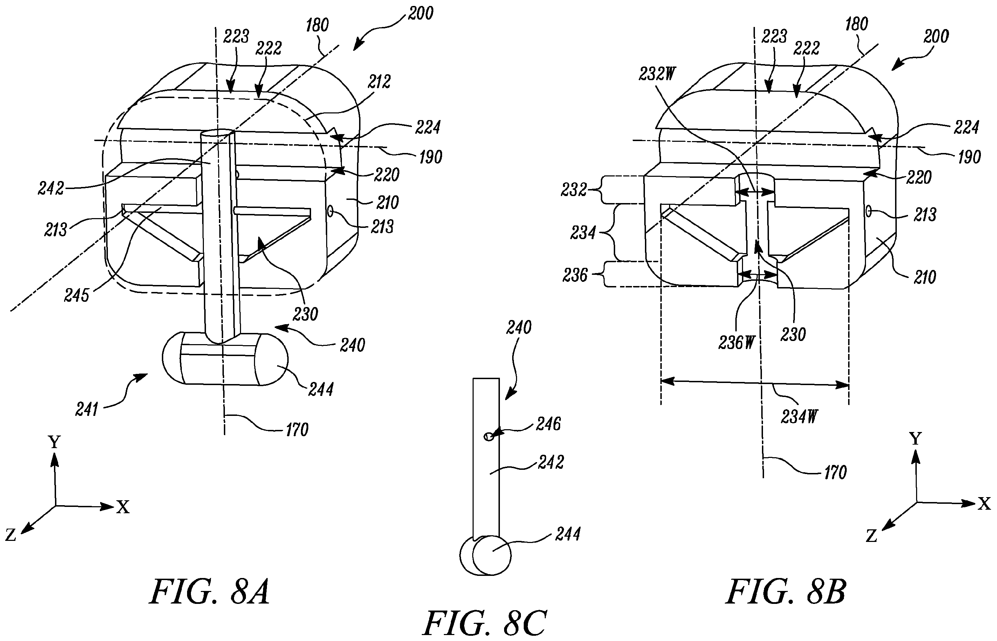

FIGS. 8A and 8B illustrate an orthodontic appliance 200 according to another embodiment of the present disclosure. The orthodontic appliance 200 shown in FIGS. 8A and 8B has one or more structures and functions that are substantially similar to those of the orthodontic appliance 100 shown in FIGS. 2A-7B. However, the orthodontic appliance 200 has a different configuration than the orthodontic appliance 100 with regards to locking and unlocking of the archwire 70 (shown in FIG. 1).

The orthodontic appliance 200 includes a body 210 having a different configuration than the body 110 of the orthodontic appliance 100. Specifically, the body 210 does not include the cavity 114 of the body 110 (shown in FIGS. 2A and 3A). More specifically, a cap portion 212 (shown as transparent and by dashed lines) of the body 210 does not include the cavity 114.

The body 210 defines a slot 220 substantially similar to the slot 120 of the body 110 (shown in FIGS. 2B and 3A). Therefore, the slot 220 defines an inserting portion 222 and a receiving portion 224 substantially similar to the inserting portion 122 and the receiving portion 124, respectively, of the slot 120 of the orthodontic appliance 100. Furthermore, the inserting portion 222 includes an open end 223 substantially similar to the open end 123 of the inserting portion 122.

The body 210 further defines an opening 230 having a function similar to that of the opening 130 of the body 110. However, the opening 230 has a different configuration than the opening 130 of the body 110. In the illustrated embodiments of FIGS. 8A and 8B, the body 210 further defines a pair of apertures 213 disposed at opposing ends of the opening 230.

As shown in FIG. 8A, the orthodontic appliance 200 includes a locking member 240. FIG. 8C illustrates the locking member 240. Referring to FIGS. 8A and 8C, the locking member 240 includes an elongate portion 242 movably and at least partially received within the opening 230. In some embodiments, the elongate portion 242 may have a circular cross-section. In some embodiments, the elongate portion 242 may have a polygonal, an elliptical, an oval, a rectangular or a square cross-section. In some embodiments, the locking member 240 further includes a head 244 connected to the elongate portion 242. The head 244 is disposed distal to the inserting portion 222 of the slot 220. In some embodiments, the locking member 240 may be T-shaped.

In the illustrated embodiment of FIGS. 8A and 8C, the elongate portion 242 further defines a hole 246 therethrough. In other words, the hole 246 is a through hole. In some embodiments, the hole 246 may have a substantially circular shape, as shown in FIG. 8C. In some other embodiments, the hole 246 may have any suitable shape, for example, but not limited to, polygonal, elliptical, oval, and so forth.

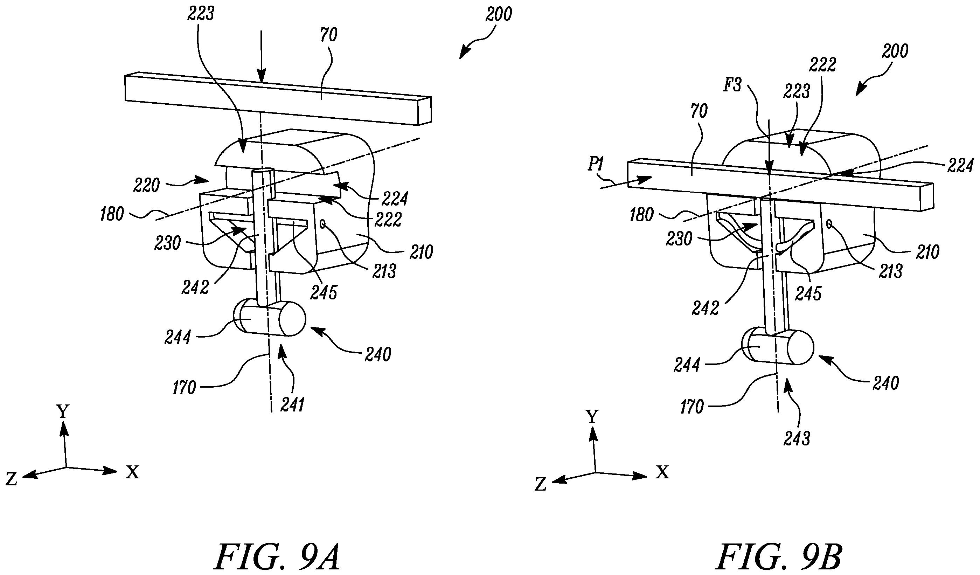

The locking member 240 is movable at least along the first axis 170 between a locked state 241 and an unlocked state 243 (shown in FIG. 9B). Furthermore, in the locked state 241, the locking member 240 at least partially extends into the inserting portion 222 of the slot 220. In the illustrated embodiment of FIG. 8A, in the locked state 241, the elongate portion 242 at least partially extends into the inserting portion 222 of the slot 220.

In the illustrated embodiment of FIG. 8A, the orthodontic appliance 200 further includes a biasing member 245 received at least partially within the opening 230. Further, the biasing member 245 is at least partially received within the hole 246 of the elongate portion 242. The biasing member 245 is configured to normally bias the locking member 240 to the locked state 241. In some embodiments, the biasing member 245 includes a super elastic metal. For example, the biasing member 245 may include shape memory alloys. Examples of suitable shape memory alloys may include, but are not limited to, titanium and its alloys, nickel titanium alloy, copper nickel titanium alloys, cobalt chromium alloy, heat treated stainless steel, and the like. However, in some other embodiments, the biasing member 245 may include any material that may normally bias the locking member 240 to the locked state 241. In the illustrated embodiment of FIG. 8A, the biasing member 245 is a resilient bar. In some embodiments, the resilient bar is received through the hole 246 of the elongate portion 242. In some embodiments, the resilient bar is at least partially received within each aperture 213 of the body 210. The resilient bar may therefore be mounted on the body 210 via the apertures 213.

In the illustrated embodiment of FIGS. 8A and 8B, the opening 230 includes a first portion 232 communicating with the inserting portion 222 of the slot 220. In some embodiments, the first portion 232 has a substantially uniform width 232W. The width 232W of the first portion 232 may be along the third axis 190. In other words, the width 232W of the first portion 232 may be substantially along the X-axis.

In some embodiments, the opening 230 further includes a second portion 234 disposed adjacent to the first portion 232. In some embodiments, the second portion 234 tapers away from the first portion 232. Further, each aperture 213 of the body 210 communicates with the second portion 234, such that the resilient bar is at least partially received in the second portion 234 of the opening 230. In some embodiments, the second portion 234 has a maximum width 234W. The maximum width 234W of the second portion 234 may be along the third axis 190. In other words, the maximum width 234W of the second portion 234 may be substantially along the X-axis.

In some embodiments, the opening 230 further includes a third portion 236 disposed adjacent to the second portion 234 opposite to the first portion 232. In some embodiments, the third portion 236 has a substantially uniform width 236W. The width 236W of the third portion 236 may be along the third axis 190. In other words, the width 236W of the third portion 236 may be substantially along the X-axis.

As shown in FIGS. 8A and 8B, the maximum width 234W of the second portion 234 is greater than the width 232W, 236W of each of the first and third portions 232, 236. Furthermore, each of the first, second and third portions 232, 234, 236 at least partially receives the elongate portion 242 therethrough.

FIGS. 9A-9D illustrate the archwire 70 and the orthodontic appliance 200. Specifically, FIGS. 9A-9D illustrate various steps for use with the archwire 70 and the orthodontic appliance 200, according to an embodiment of the present disclosure. More specifically, FIGS. 9A-9D illustrate the various steps for removably retaining the archwire 70 within the receiving portion 224 of the orthodontic appliance 200. The cap portion 212 of the body 210 is not shown in FIGS. 9A-9D for illustrative purposes.

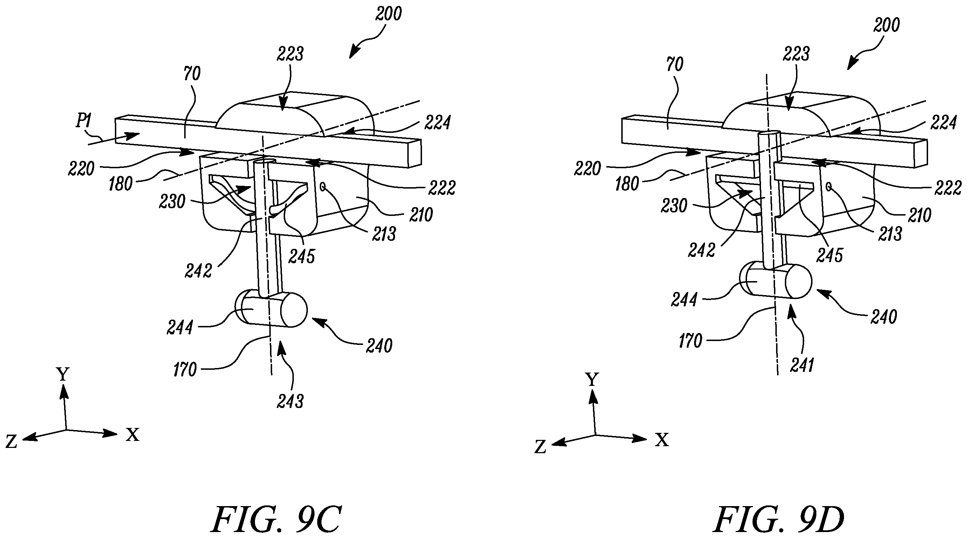

Referring to FIGS. 9A, and 9D, the locking member 240 is normally biased to the locked state 241. As shown in FIG. 9A, in the locked state 241, the locking member 240 at least partially extends into the inserting portion 222 of the slot 220. Specifically, in the locked state 241, the elongate portion 242 at least partially extends into the inserting portion 222 of the slot 220. The inserting portion 222 is configured to removably receive the archwire 70 therein through the open end 223. In other words, the archwire 70 may be inserted through the open end 223 of the inserting portion 222.

As shown in FIG. 9B, an external force F3 is applied by the archwire 70 during insertion of the archwire 70 into the inserting portion 222 of the slot 220. However, in some other embodiments, the external force F3 may be applied by other means. For example, the external force F3 may be applied by gripping the head 244 of the locking member 240. The head 244 may be gripped by a tool, such as a fork. In some embodiments, the external force F3 may be substantially along the first axis 170. In the illustrated embodiment of FIG. 9B, the first axis 170 is substantially aligned with the Y-axis. Therefore, the external force F3 may be substantially along the Y-axis. The external force F3 may be applied on the locking member 240 via the archwire 70.

Upon application of the external force F3, the locking member 240 is movable to the unlocked state 243 to allow movement of the archwire 70 between the inserting portion 222 and the receiving portion 224. As shown in FIG. 9B, the locking member 240 moves to the unlocked state 243 upon application of the external force F3. Specifically, in the illustrated embodiment of FIG. 9B, in the unlocked state 243, the elongate portion 242 at least partially retracts into the opening. 230.

As shown in FIG. 9C, a force P1 may be applied to the archwire 70 to move the archwire 70 from the inserting portion 222 of the slot 220 to the receiving portion 224 of the slot 220. In some embodiments, the force P1 may be along the second axis 180. For example, the force P1 may be applied to the archwire 70 by a dentist practitioner.

As shown in FIG. 9D, the archwire 70 is inserted into the receiving portion 224 of the slot 220. By inserting the archwire 70 into the receiving portion 224 of the slot 220, the external force F3 (shown in FIG. 9B) applied by the archwire 70 may be removed from the locking member 240. As shown in FIG. 9D, after removal of the external force F3, the locking member 240 is biased to the locked state 241 and removably retains the archwire 70 within the receiving portion 224 of the slot 220. Specifically, in the illustrated embodiment of FIG. 9C, upon removal of the external force F3, the elongate portion 242 at least partially extends into the inserting portion 222 of the slot 220 and removably retains the archwire 70 within the receiving portion 224 of the slot 220. In some embodiments, a portion of the locking member 240 extending into the inserting portion 222 in the locked state 241 and adjacent to the receiving portion 224 may include chamfered edges to ease insertion of the archwire 70 into the receiving portion 224.

Steps for removing the archwire 70 from the receiving portion 224 may be similar to the steps for removing the archwire 70 from the receiving portion 124 of the orthodontic appliance 100 as described with reference to FIGS. 5A-5D. However, the external force F3 is applied to the head 244. That is, the external force F3 may be applied to the head 244 by a tool, for example, a fork.

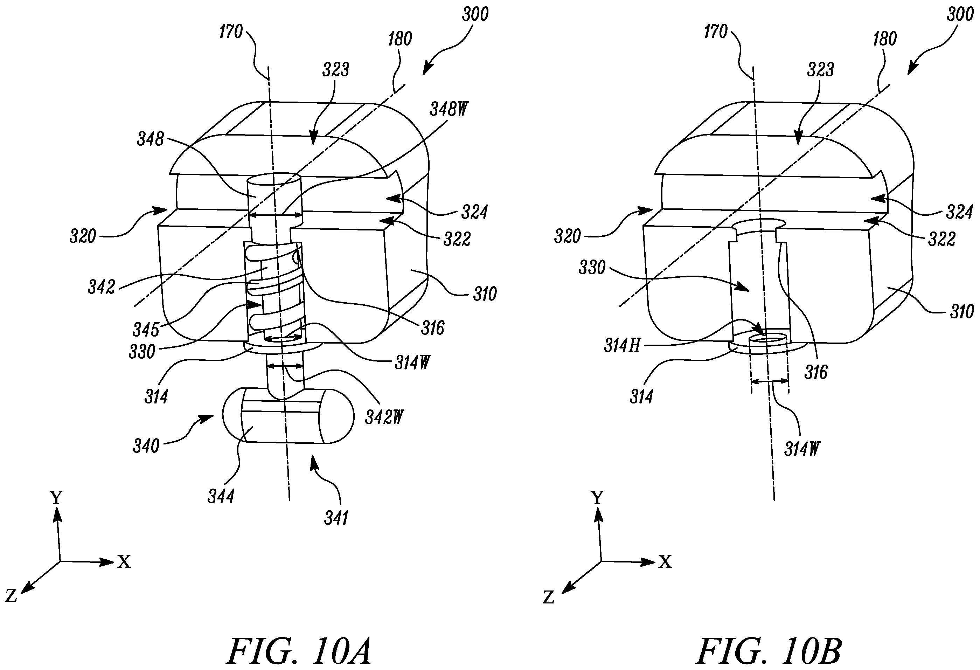

FIGS. 10A and 10B illustrate an orthodontic appliance 300 according to another embodiment of the present disclosure. The orthodontic appliance 300 has one or more structures and functions that are substantially similar to those of the orthodontic appliance 100 shown in FIGS. 2A-7B and those of the orthodontic appliance 200 shown in FIGS. 8A-9C. However, the orthodontic appliance 300 has a different configuration from the orthodontic appliance 100 and the orthodontic appliance 200 with regards to locking and unlocking of the archwire 70 (shown in FIG. 1).

The orthodontic appliance 300 includes a body 310 having a different configuration than the body 110 of the orthodontic appliance 100. Specifically, the body 310 does not include the cavity 114 of the body 110 (shown in FIGS. 2A and 3A).

The body 310 defines a slot 320 substantially similar to the slot 120 of the body 110 (shown in FIGS. 2B and 3A). Therefore, the slot 320 defines an inserting portion 322 and a receiving portion 324 substantially similar to the inserting portion 122 and the receiving portion 124, respectively, of the slot 120 of the orthodontic appliance 100. Furthermore, the inserting portion 322 includes an open end 323 substantially similar to the open end 123 of the inserting portion 122.

The body 310 further defines an opening 330 having a function similar to that of the opening 130 of the body 110 of the orthodontic appliance 100. However, the opening 330 of the orthodontic appliance 300 has a different configuration from the opening 130 of the orthodontic appliance 100.

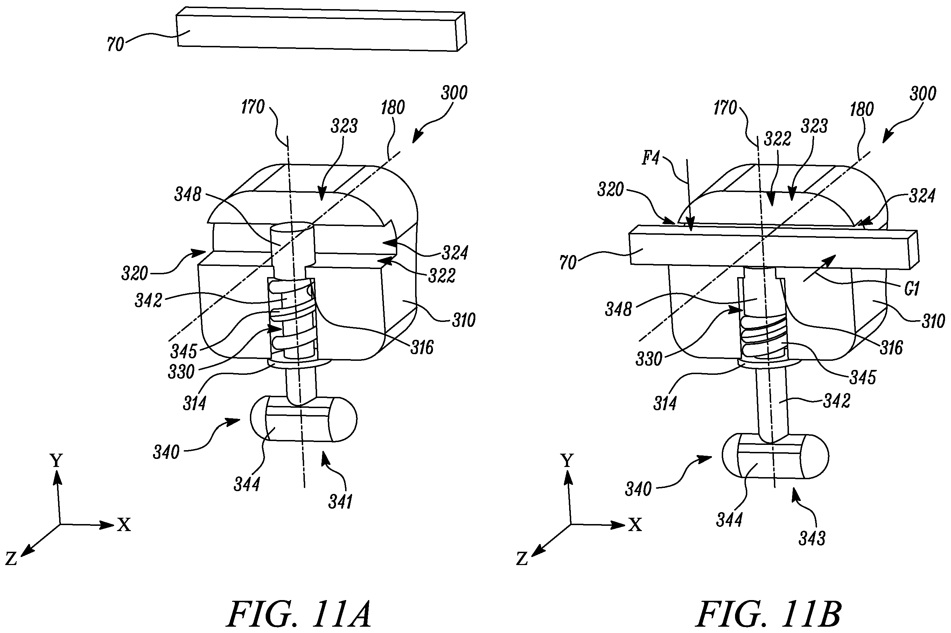

As shown in FIG. 10A, the orthodontic appliance 300 includes a locking member 340 substantially similar to the locking member 240 of the orthodontic appliance 200. Specifically, the locking member 340 includes an elongate portion 342 and a head 344 similar to the elongate portion 242 and the head 244, respectively, of the locking member 240. Furthermore, the locking member 340 includes a locked state 341 and an unlocked state 343 (shown in FIG. 11B) similar to the locked state 241 and the unlocked state 243, respectively, of the locking member 240. However, the locking member 340 may not define the hole 246 of the locking member 240. In the illustrated embodiment of FIG. 10A, the locking member 340 further includes a tail 348. In some embodiments, the tail 348 may be connected to the elongate portion 342 and disposed distal to the head 344 of the locking member 340. In some embodiments, a maximum width 348W of the tail 348 may be greater than a maximum width 342W of the elongate portion 342. The maximum width 348W of the tail 348 and the maximum width 342W of the elongate portion 342 may be substantially along the X-axis.

In some embodiments, the orthodontic appliance 300 further includes a support member 314 disposed adjacent to the opening 330 and distal to the inserting portion 322 of the slot 320. In the illustrated embodiment of FIG. 10A and 10B, the support member 314 is a washer. In illustrated embodiment of FIGS. 10A and 10B, the support member 314 includes a hole 314H therethrough. In some embodiments, a maximum width 314W of the hole 314H is greater than the maximum width 342W of the elongate portion 342. In the illustrated embodiment of FIGS. 10A and 10B, the maximum width 314W of the hole 314H is substantially along the X-axis. Furthermore, the maximum width 314W of the hole 314H may be less than the maximum width 348W of the tail 348. In some embodiments, the support member 314 is fixedly coupled to the body 310 by any suitable method, such as welding, adhesives, brazing, mechanical fasteners, and so forth. In some embodiments, where the cap portion (not shown) of the body 310 is formed separately from the body 310, the support member 314 may be integrally formed with the body 310. In some embodiments, the support member 314 is made up of two or more parts that are assembled together after the elongate portion 342 of the locking member 340 is at least partially received within the hole 314H of the support member 314.

In the illustrated embodiment of FIGS. 10A and 10B, the body 310 further includes a support surface 316 disposed adjacent to the opening 330 and proximal to the inserting portion 322 of the slot 320. The support surface 316 may be a shoulder extending into the opening 330.

The orthodontic appliance 300 further includes a biasing member 345 different from the biasing member 245 of the orthodontic appliance 200. In the illustrated embodiment of FIGS. 10A and 10B, the biasing member 345 is a coil spring. The coil spring is supported between the support member 314 and the support surface 316. The coil spring may normally bias the locking member 340 into the inserting portion 322 of the slot 320 in the locked state 341. Specifically, the coil spring may normally bias the elongate portion 342 into the inserting portion 322 of the slot 320 in the locked state 341. In the illustrated embodiment of FIG. 10A, the coil spring may normally bias the tail 348 into the inserting portion 322 of the slot 320 in the locked state 341.

FIGS. 11A-11D illustrate the archwire 70 and the orthodontic appliance 300. Specifically, FIGS. 11A-11D illustrate various steps for use with the archwire 70 and the orthodontic appliance 300, according to an embodiment of the present disclosure. More specifically, FIGS. 11A-11D illustrate the various steps for removably retaining the archwire 70 within the receiving portion 324 of the orthodontic appliance 300.

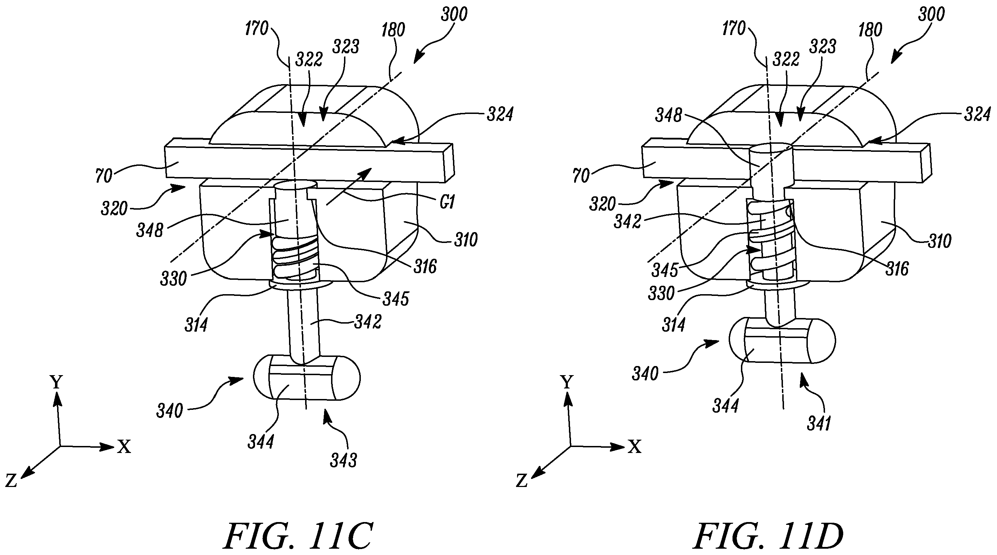

Referring to FIGS. 11A, and 11D, the locking member 340 is normally biased to the locked state 341. As shown in FIG. 11A, in the locked state 341, the locking member 340 at least partially extends into the inserting portion 322 of the slot 320. Specifically, in the locked state 341, the elongate portion 342 at least partially extends into the inserting portion 322 of the slot 320. Specifically, the coil spring may normally bias the tail 348 into the inserting portion 322 of the slot 320 in the locked state 341. The inserting portion 322 is configured to removably receive the archwire 70 therein through the open end 323. In other words, the archwire 70 may be inserted through the open end 323 of the inserting portion 322.

As shown in FIG. 11B, an external force F4 is applied by the archwire 70 during insertion of the archwire 70 into the inserting portion 322 of the slot 320. However, in some other embodiments, the external force F4 may be applied by other means. For example, the external force F4 may be applied by gripping the head 344 of the locking member 340. The head 244 may be gripped by a tool, such as a fork. In some embodiments, the external force F4 may be substantially along the first axis 170. In the illustrated embodiment of FIG. 11B, the first axis 170 is substantially aligned with the Y-axis. Therefore, the external force F4 may be substantially along the Y-axis. The external force F4 may be applied on the locking member 340 via the archwire 70.

Upon application of the external force F4, the locking member 340 is movable to the unlocked state 343 to allow movement of the archwire 70 between the inserting portion 322 and the receiving portion 324. As shown in FIG. 11B, the locking member 340 moves to the unlocked state 343 upon application of the external force F3. Specifically, in the unlocked state 343, the elongate portion 342 at least partially retracts into the opening. 330. More specifically, in the illustrated embodiment of FIG. 11B, the coil spring compresses upon application of the external force F4, and the tail 348 of the locking member 340 at least partially retracts into the opening 330. As discussed above, in the unlocked state 343, the locking member 340 may allow movement of the archwire 70 between the inserting portion 322 and the receiving portion 324.

As shown in FIG. 11C, a force G1 may be applied to the archwire 70 to move the archwire 70 from the inserting portion 322 of the slot 320 to the receiving portion 324 of the slot 320. In some embodiments, the force G1 may be along the second axis 180. For example, the force G1 may be applied to the archwire 70 by a dentist practitioner.

As shown in FIG. 11D, the archwire 70 is inserted into the receiving portion 324 of the slot 320. By inserting the archwire 70 into the receiving portion 324 of the slot 320, the external force F4 (shown in FIG. 11B) applied by the archwire 70 may be removed from the locking member 340. As shown in FIG. 11D, after removal of the external force F4, the locking member 340 is biased to the locked state 341 and removably retains the archwire 70 within the receiving portion 324 of the slot 320. Specifically, in the illustrated embodiment of FIG. 11C, upon removal of the external force F4, the elongate portion 342 at least partially extends into the inserting portion 322 of the slot 320 and removably retains the archwire 70 within the receiving portion 324 of the slot 320. **In** some embodiments, a portion of the locking member 340 extending into the inserting portion 322 in the locked state 341 and adjacent to the receiving portion 324 may include chamfered edges to ease insertion of the archwire 70 into the receiving portion 324.

Steps for removing the archwire 70 from the receiving portion 324 may be similar to the steps for removing the archwire 70 from the receiving portion 124 of the orthodontic appliance 100 as described with reference to FIGS. 5A-5D. However, the external force F4 is applied on the head 344. That is, the external force F4 may be applied on the head 344 by a tool, for example, a fork.

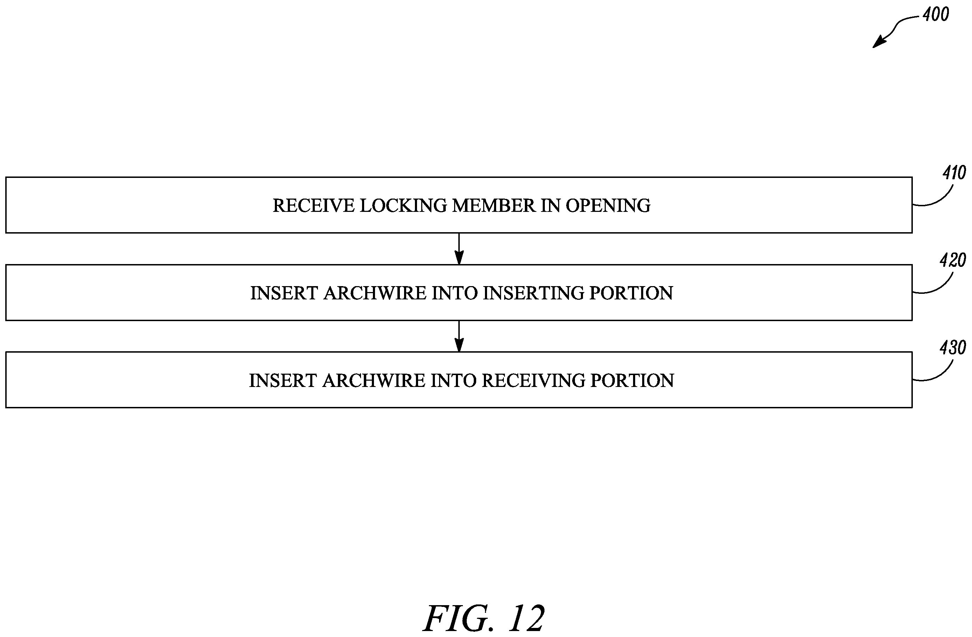

FIG. 12 illustrates a flowchart depicting a method 400 for use with the archwire 70 (shown in FIGS. 4A-4D, 5A-5D, 9A-9D, and 11A-11D) and the orthodontic appliance 100, 200, 300. The orthodontic appliances 100, 200, 300 includes the respective slots 120, 220, 320 including the respective inserting portions 122, 222, 322 extending along the first axis 170 and the respective receiving portions 124, 224, 324 extending along the second axis 180 inclined to the first axis 170. The method 400 will be described with reference to FIGS. 1A-10B. The method 400 includes the following steps:

At step 410, the method 400 includes movably and at least partially receiving the locking member 140, 240, 340 in the opening 130, 230, 330 of the orthodontic appliance 100, 200, 300, such that the locking member 140, 240, 340 is normally biased to the locked state 141, 241, 341. In the locked state 141, 241, 341, the locking member 140, 240, 340 at least partially extends into the inserting portion 122, 222, 322 of the slot 120, 220, 320.

As shown in FIG. 3A, in some embodiments, movably and at least partially receiving the locking member 140 in the opening 130 of the orthodontic appliance 100 further includes movably and at least partially receiving the pair of resilient arms 145 of the locking member 140 within the opening 130.

As shown in FIGS. 9A and 10A, in some embodiments, movably and at least partially receiving the locking member 240, 340 in the opening 230, 330 of the orthodontic appliance 200, 300 further includes movably and at least partially receiving the elongate portion 242, 342 of the locking member 240, 340 within the opening 230, 330. In some embodiments, the method 400 further includes biasing the locking member 240, 340 to the locked state 241, 341 by the biasing member 245, 345.

At step 420, the method 400 includes inserting the archwire 70 into the inserting portion 122, 222, 322 of the slot 120, 220, 320, such that the archwire 70 engages the locking member 140, 240, 340 and moves the locking member 140, 240, 340 from the locked state 141, 241, 341 into the opening 130, 230, 330 along the first axis 170.

As shown in FIGS. 5A to 5B, in some embodiments, the method 400 further includes moving the resilient arms 145 of the locking member 140 along the first axis 170 relative to the opening 130, such that each resilient arm 145 resiliently moves along the third axis 190. As discussed above, the third axis 190 is substantially orthogonal to each of the first and second axes 170, 180.

At step 430, the method 400 includes inserting the archwire 70 into the receiving portion 124, 224, 324 of the slot 120, 220, 320, such that the locking member 140, 240, 340 is biased to the locked state 141, 241, 341 and removably retains the archwire 70 within the receiving portion 124, 224, 324 of the slot 120, 220, 320.

In some embodiments, the method 400 further includes moving the locking member 140, 240, 340 from the locked state 141, 241, 341 to the unlocked state 143, 243, 343 along the first axis 170, such that the locking member 140, 240, 340 is at least partially retracted within the opening 130, 230, 330.

In some embodiments, as shown in FIGS. 5A-5C, the locking member 140 is moved from the locked state 141 to the unlocked state 143 by the tool 150.

In some other embodiments, the locking member 240, 340 is moved from the locked state 241, 341 to the unlocked state 243, 343 by gripping the head 244, 344 of the locking member 240, 340.

In some embodiments, the method 400 further includes moving the archwire 70 from the receiving portion 124, 224, 324 to the inserting portion 122, 222, 322 along the second axis 180.

In some embodiments, the method 400 further includes removing the archwire 70 from the inserting portion 122, 222, 322.

The orthodontic appliances 100, 200, 300 and the method 400 of the present disclosure may allow toolless ligation of the archwire 70 to each of the orthodontic appliances 100, 200, 300. Specifically, the archwire 70 may be inserted through the open end 123, 223, 323 of the inserting portion 122, 222, 322 and removably retained within the receiving portion 124, 224, 324 of the slot 120, 220, 320 without a need of extra tools. Therefore, the orthodontic appliance 100, 200, 300 may reduce a chair-time of the patient during dental treatment. Furthermore, the orthodontic appliance 100, 200, 300 may have a robust design as the locking member 140, 240, 340 reliably secures the archwire 70 to the orthodontic appliance 100, 200, 300. Therefore, the orthodontic appliance 100, 200, 300 may be less prone to failure. Moreover, the combination of the slot 120, 220, 320 including the inserting portion 122, 222, 322 and the receiving portion 124, 224, 324, and the locking member 140, 240, 340 that is normally biased to the locked state 141, 241, 341 may enable the orthodontic appliance 100, 200, 300 of the present disclosure to have a simpler design and a lower profile as compared to conventional self-ligating brackets. Therefore, the orthodontic appliances 100, 200, 300 may be suitable for orthodontic treatments requiring low profile orthodontic appliances. The locking members 140, 240, 340 of the present disclosure may not experience bending loads due to the archwire 70, and may only experience uncritical compression loads. Therefore, the locking members 140, 240, 340 may provide robust locking of the archwire 70.

It will be appreciated that the arrangements presented herein may be varied in any number of aspects while still remaining within the scope of the disclosures herein.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated that the scope of the present invention is defined by the wording of the claims.

**Claims**

1. An orthodontic appliance (100, 200, 300) for removably receiving an archwire (70), the orthodontic appliance comprising:

   a body (110, 210, 310) defining a slot (120, 220, 320), the slot comprising:

   an inserting portion (122, 222, 322) comprising an open end (123, 223, 323), the inserting portion extending along a first axis (170) from the open end, wherein the inserting portion is configured to removably receive the archwire therein through the open end; and
   a receiving portion (124, 224, 324) spaced apart from the open end and communicating with the inserting portion, wherein the receiving portion extends along a second axis (180) inclined to the first axis by an inclination angle ($\alpha$);

   the body further defining an opening (130, 230, 330) communicating with the inserting portion of the slot and spaced apart from the receiving portion of the slot; and
   a locking member (140, 240, 340) at least partially and movably received within the opening, wherein the locking member is movable at least along the first axis between a locked state (141, 241, 341) and an unlocked state (143, 243, 343), wherein the locking member is normally biased to the locked state and movable to the unlocked state,
   wherein, in the locked state, the locking member at least partially extends into the inserting portion of the slot, and
   wherein, in the unlocked state, the locking member is displaced from the locked state into the opening along the first axis, such that:

upon application of an external force, the locking member is movable to the unlocked state to allow movement of the archwire between the inserting portion and the receiving portion; and
upon removal of the external force, the locking member is movable to the locked state to removably retain the archwire within the receiving portion of the slot,

wherein the locking member (140, 240, 340) comprises either

(a) a pair of resilient arms (145) connected to each other, and

wherein, in the locked state (141), each resilient arm at least partially extends into the inserting portion (122) of the slot (120), and
wherein, in the unlocked state (143), each resilient arm at least partially retracts into the opening (130), wherein the opening tapers from the inserting portion of the slot, such that: upon application of the external force, the locking member (140) moves along the first axis relative to the opening, such that each resilient arm of the locking member resiliently moves along a third axis (190), wherein the third axis is substantially orthogonal to each of the first and second axes; and upon removal of the external force, the resilient arms of the locking member are biased to move to the locked state,

or
(b) an elongate portion (242, 342) movably and at least partially received within the opening (230, 330); and a head (244, 344) connected to the elongate portion and disposed distal to the inserting portion (222, 322) of the slot (220, 320), and a biasing member (245, 345) at last partially received in the opening (230, 330) and configured to normally bias the locking member to the locked state;

wherein, in the locked state (241, 341), the elongate portion at least partially extends into the inserting portion of the slot, and wherein, in the unlocked state (243, 343), the elongate portion at least partially retracts into the opening, and
wherein the biasing member is

- a coil spring (345) or
- a resilient bar (245) received through a hole (246) defined through the elongate portion (242).

2. The orthodontic appliance of claim 1, wherein, when the biasing member (245) is the resilient bar (245) received through a hole (246) defined in the elongate portion (242), the body (210) further defines a pair of apertures (213) disposed at opposing ends of the opening (230), and wherein the resilient bar (245) is at least partially received within each aperture of the body.

3. The orthodontic appliance of claim 2, wherein the opening (230) comprises:

a first portion (232) communicating with the inserting portion (222) of the slot (220), the first portion having a substantially uniform width (232W);
a second portion (234) disposed adjacent to the first portion and tapering away from the first portion, wherein each aperture (213) of the body (210) communicates with the second portion, such that the resilient bar (245) is at least partially received **in** the second portion of the opening; and
a third portion (236) disposed adjacent to the second portion opposite to the first portion, the third portion having a substantially uniform width (236W),
wherein a maximum width (234W) of the second portion is greater than the width of each of the first and third portions, and wherein each of the first, second and third portions at least partially receives the elongate portion (242) therethrough.

4. The orthodontic appliance of claim 1, wherein the body further comprises a first surface (115) and a second surface (116) opposing the first surface; and wherein the first and second surfaces at least partially define the inserting portion (122) of the slot (120) therebetween.

5. The orthodontic appliance of claim 4, wherein the body (110) further comprises:

a third surface (117) disposed adjacent to and inclined to the first surface (115);
a fourth surface (118) disposed adjacent to and inclined to the second surface (116), wherein the fourth surface is disposed opposite to the third surface; and

a fifth surface (119) extending between the third surface and the fourth surface;

wherein the third, fourth and fifth surfaces at least partially define the receiving portion (124) of the slot (120) therebetween.

**6.** The orthodontic appliance of claim 5, wherein the opening (130) extends from the fourth surface (118).

**7.** The orthodontic appliance of claim 5, wherein each of the first, second, third and fourth surfaces (115, 116, 117, 118) is substantially planar.

**8.** The orthodontic appliance of claim 1, wherein the locking member (140, 240, 340) engages the body (110, 210, 310) in each of the locked state (141, 241, 341) and the unlocked state (143, 243, 343).

**9.** An orthodontic system (10) for a plurality of teeth (50), the orthodontic system comprising:

an archwire (70); and

a plurality of orthodontic appliances (100, 200, 300), wherein at least one orthodontic appliance is an orthodontic appliance as defined in claims 1 to 8.

**Patentansprüche**

**1.** Eine kieferorthopädische Vorrichtung (100, 200, 300) zum entfernbaren Aufnehmen eines Bogendrahts (70), wobei die kieferorthopädische Vorrichtung aufweist:
einen Körper (110, 210, 310), der einen Schlitz (120, 220, 320) definiert, wobei der Schlitz aufweist:

einen Einsetzabschnitt (122, 222, 322), aufweisend ein offenes Ende (123, 223, 323), wobei sich der Einsetzabschnitt entlang einer ersten Achse (170) von dem offenen Ende erstreckt, wobei der Einsetzabschnitt konfiguriert ist, um den Bogendraht durch das offene Ende entfernbar darin aufzunehmen; und
einen Aufnahmeabschnitt (124, 224, 324), der von dem offenen Ende beabstandet ist und mit dem Einsetzabschnitt in Verbindung steht, wobei sich der Aufnahmeabschnitt entlang einer zweiten Achse (180), die zu der ersten Achse um einen Neigungswinkel ($\alpha$) geneigt ist, erstreckt;
wobei der Körper ferner eine Öffnung (130, 230, 330), die mit dem Einsetzabschnitt des Schlitzes in Verbindung steht und von dem Aufnahmeabschnitt des Schlitzes beabstandet ist, definiert; und
ein Verriegelungselement (140, 240, 340), das mindestens teilweise und bewegbar innerhalb der Öffnung aufgenommen ist, wobei das Verriegelungselement mindestens entlang der ersten Achse zwischen einem verriegelten Zustand (141, 241, 341) und einem entriegelten Zustand (143, 243, 343) bewegbar ist, wobei das Verriegelungselement normal in den verriegelten Zustand vorgespannt und in den entriegelten Zustand bewegbar ist,
wobei sich, in dem verriegelten Zustand, das Verriegelungselement mindestens teilweise in den Einsetzabschnitt des Schlitzes erstreckt, und
wobei, in dem entriegelten Zustand, das Verriegelungselement, von dem verriegelten Zustand entlang der ersten Achse in die Öffnung derart verschoben wird, dass:

bei Einwirkung einer äußeren Kraft das Verriegelungselement in den entriegelten Zustand bewegbar ist, um eine Bewegung des Bogendrahts zwischen dem Einsetzabschnitt und dem Aufnahmeabschnitt zu ermöglichen; und bei Entfernung der äußeren Kraft das Verriegelungselement in den verriegelten Zustand bewegbar ist, um den Bogendraht innerhalb des Aufnahmeabschnitts des Schlitzes entfernbar zu halten, wobei das Verriegelungselement (140, 240, 340) entweder aufweist

(a) ein Paar elastischer Arme (145), die miteinander verbunden sind, und

wobei sich, in dem verriegelten Zustand (141), jeder elastische Arm mindestens teilweise in den Einsetzabschnitt (122) des Schlitzes (120) erstreckt, und
wobei sich, in dem entriegelten Zustand (143), jeder elastische Arm mindestens teilweise in die Öffnung (130) zurückzieht,
wobei sich die Öffnung von dem Einsetzabschnitt des Schlitzes derart verjüngt, dass: bei Einwirkung der äußeren Kraft sich das Verriegelungselement (140) entlang der ersten Achse relativ zu der Öffnung derart bewegt, dass sich jeder elastische Arm des Verriegelungselements entlang einer dritten Achse (190) elastisch bewegt,
wobei die dritte Achse im Wesentlichen orthogonal zu jeder der ersten und der zweiten Achse ist; und bei Entfernung der äußeren Kraft die elastischen Arme des Verriegelungselements vorgespannt sind, um sich in den verriegelten Zustand zu bewegen,

oder
(b) einen länglichen Abschnitt (242, 342), der bewegbar und mindestens teilweise innerhalb der Öffnung (230, 330) aufgenommen ist; und einen Kopf (244, 344), der mit dem länglichen Abschnitt verbunden und zu dem Einsetzabschnitt (222, 322) des Schlitzes (220, 320) distal angeordnet ist, und ein Vorspannelement (245, 345), das mindestens teilweise in der Öffnung (230, 330) aufgenommen und konfiguriert ist, um das Verriegelungselement normal in den verriegelten Zustand vorzuspannen;

wobei sich, in dem verriegelten Zustand (241, 341), der länglich Abschnitt mindestens teilweise in den Einsetzabschnitt des Schlitzes erstreckt, und wobei sich, in dem entriegelten Zustand (243, 343), der längliche Abschnitt mindestens teilweise in die Öffnung zurückzieht, und wobei das Vorspannelement ist

- eine Schraubenfeder (345) oder
- ein elastischer Stab (245), der durch ein Loch (246), das durch den länglichen Abschnitt (242) definiert ist, aufgenommen ist.

2. Die kieferorthopädische Vorrichtung nach Anspruch 1, wobei, wenn das Vorspannelement (245) der elastische Stab (245) ist, der durch ein Loch (246), das in dem länglichen Abschnitt (242) definiert ist, aufgenommen ist, der Körper (210) ferner ein Paar Aperturen (213), die an gegenüberliegenden Enden der Öffnung (230) angeordnet sind, definiert, und wobei der elastische Stab (245) mindestens teilweise innerhalb jeder Apertur des Körpers aufgenommen ist.

3. Die kieferorthopädische Vorrichtung nach Anspruch 2, wobei die Öffnung (230) aufweist:

einen ersten Abschnitt (232), der mit dem Einsetzabschnitt (222) des Schlitzes (220) in Verbindung steht, wobei der erste Abschnitt über eine im Wesentlichen gleichmäßige Breite (232W) verfügt;
einen zweiten Abschnitt (234), der an den ersten Abschnitt angrenzend angeordnet ist und sich von dem ersten Abschnitt weg verjüngt, wobei jede Apertur (213) des Körpers (210) mit dem zweiten Abschnitt derart in Verbindung steht, dass der elastische Stab (245) mindestens teilweise in dem zweiten Abschnitt der Öffnung aufgenommen ist; und
einen dritten Abschnitt (236), der an den zweiten Abschnitt gegenüber dem ersten Abschnitt angrenzend angeordnet ist, wobei der dritte Abschnitt über eine im Wesentlichen gleichmäßige Breite (236W) verfügt,
wobei eine maximale Breite (234W) des zweiten Abschnitts größer als die Breite jedes des ersten und des dritten Abschnitts ist, und wobei jeder des ersten, des zweiten und des dritten Abschnitts den länglichen Abschnitt (242) mindestens teilweise dahindurch aufnimmt.

4. Die kieferorthopädische Vorrichtung nach Anspruch 1, wobei der Körper ferner eine erste Oberfläche (115) und eine zweite Oberfläche (116), die der ersten Oberfläche gegenüberliegt, aufweist; und wobei die erste und die zweite Oberfläche mindestens teilweise den Einsetzabschnitt (122) des Schlitzes (120) dazwischen definieren.

5. Die kieferorthopädische Vorrichtung nach Anspruch 4, wobei der Körper (110) ferner aufweist:

eine dritte Oberfläche (117), die an die erste Oberfläche (115) angrenzend angeordnet und zu dieser geneigt ist;
eine vierte Oberfläche (118), die an die zweite Oberfläche (116) angrenzend angeordnet und zu dieser geneigt ist, wobei die vierte Oberfläche gegenüber der dritten Oberfläche angeordnet ist; und
eine fünfte Oberfläche (119), die sich zwischen der dritten Oberfläche und der vierten Oberfläche erstreckt;
wobei die dritte, die vierte und die fünfte Oberfläche mindestens teilweise den Aufnahmeabschnitt (124) des Schlitzes (120) dazwischen definieren.

6. Die kieferorthopädische Vorrichtung nach Anspruch 5, wobei sich die Öffnung (130) von der vierten Oberfläche (118) erstreckt.

7. Die kieferorthopädische Vorrichtung nach Anspruch 5, wobei jede der ersten, der zweiten, der dritten und der vierten Oberfläche (115, 116, 117, 118) im Wesentlichen eben ist.

8. Die kieferorthopädische Vorrichtung nach Anspruch 1, wobei das Verriegelungselement (140, 240, 340) in jedem des verriegelten Zustands (141, 241, 341) und des entriegelten Zustands (143, 243, 343) den Körper (110, 210, 310) in Eingriff nimmt.

**9.** Ein kieferorthopädisches System (10) für eine Mehrzahl von Zähnen (50), wobei das kieferorthopädische System aufweist:

einen Bogendraht (70); und
eine Mehrzahl von kieferorthopädischen Vorrichtungen (100, 200, 300), wobei mindestens eine kieferorthopädische Vorrichtung eine kieferorthopädische Vorrichtung wie in den Ansprüchen 1 bis 8 definiert ist.

**Revendications**

**1.** Appareil orthodontique (100, 200, 300) permettant de recevoir de manière amovible un arc dentaire (70), l'appareil orthodontique comprenant :
un corps (110, 210, 310) définissant une fente (120, 220, 320), la fente comprenant :

une partie d'insertion (122, 222, 322) comprenant une extrémité ouverte (123, 223, 323), la partie d'insertion s'étendant le long d'un premier axe (170) à partir de l'extrémité ouverte, dans lequel la partie d'insertion est conçue pour recevoir de manière amovible l'arc dentaire à l'intérieur de celle-ci à travers l'extrémité ouverte ; et
une partie de réception (124, 224, 324) espacée de l'extrémité ouverte et communiquant avec la partie d'insertion, dans lequel la partie de réception s'étend le long d'un deuxième axe (180) incliné par rapport au premier axe selon un angle d'inclinaison ($\alpha$) ;
le corps définissant en outre une ouverture (130, 230, 330) communiquant avec la partie d'insertion de la fente et espacée de la partie de réception de la fente ; et
un élément de verrouillage (140, 240, 340) reçu au moins partiellement et de manière mobile au sein de l'ouverture, dans lequel l'élément de verrouillage peut être déplacé au moins le long du premier axe entre un état verrouillé (141, 241, 341) et un état déverrouillé (143, 243, 343), dans lequel l'élément de verrouillage est normalement sollicité dans l'état verrouillé et peut être déplacé à l'état déverrouillé,
dans lequel, dans l'état verrouillé, l'élément de verrouillage s'étend au moins partiellement dans la partie d'insertion de la fente, et
dans lequel, dans l'état déverrouillé, l'élément de verrouillage est déplacé de l'état verrouillé dans l'ouverture le long du premier axe, de telle sorte que :

lors de l'application d'une force externe, l'élément de verrouillage peut être déplacé à l'état déverrouillé pour permettre un déplacement de l'arc dentaire entre la partie d'insertion et la partie de réception ;
et lors du retrait de la force externe, l'élément de verrouillage peut être déplacé à l'état verrouillé pour retenir de manière amovible l'arc dentaire au sein de la partie de réception de la fente,
dans lequel l'élément de verrouillage (140, 240, 340) comprend soit

(a) une paire de bras élastiques (145) reliés l'un à l'autre, et

dans lequel, dans l'état verrouillé (141), chaque bras élastique s'étend au moins partiellement dans la partie d'insertion (122) de la fente (120), et
dans lequel, dans l'état déverrouillé (143), chaque bras élastique se rétracte au moins partiellement dans l'ouverture (130),
dans lequel l'ouverture s'effile à partir de la partie d'insertion de la fente, de telle sorte que lors de l'application de la force externe, l'élément de verrouillage (140) se déplace le long du premier axe par rapport à l'ouverture, de telle sorte que chaque bras élastique de l'élément de verrouillage se déplace élastiquement le long d'un troisième axe (190),
dans lequel le troisième axe est sensiblement orthogonal à chacun des premier et deuxième axes ; et
lors du retrait de la force externe, les bras élastiques de l'élément de verrouillage sont sollicités pour se déplacer à l'état verrouillé,

soit
(b) une partie allongée (242, 342) reçue de manière mobile et au moins partiellement au sein de l'ouverture (230, 330) ; et une tête (244, 344) reliée à la partie allongée et disposée distale par rapport à la partie d'insertion (222, 322) de la fente (220, 320), et un élément de sollicitation (245, 345) reçu au moins partiellement dans l'ouverture (230, 330) et conçu pour solliciter normalement l'élément de verrouillage à l'état verrouillé ;

dans lequel, dans l'état verrouillé (241, 341), la partie allongée s'étend au moins partiellement dans la partie d'insertion de la fente, et dans lequel, dans l'état déverrouillé (243, 343), la partie allongée se rétracte au moins partiellement dans l'ouverture, et

dans lequel l'élément de sollicitation est

- un ressort hélicoïdal (345) ou
- une barre élastique (245) reçue à travers un trou (246) défini à travers la partie allongée (242).

2. Appareil orthodontique selon la revendication 1, dans lequel, lorsque l'élément de sollicitation (245) est la barre élastique (245) reçue à travers un trou (246) défini dans la partie allongée (242), le corps (210) définit en outre une paire d'orifices (213) disposés au niveau d'extrémités opposées de l'ouverture (230), et dans lequel la barre élastique (245) est au moins partiellement reçue au sein de chaque orifice du corps.

3. Appareil orthodontique selon la revendication 2, dans lequel l'ouverture (230) comprend :

une première partie (232) communiquant avec la partie d'insertion (222) de la fente (220), la première partie ayant une largeur sensiblement uniforme (232W) ;
une deuxième partie (234) disposée adjacente à la première partie et s'effilant à l'écart de la première partie, dans lequel chaque orifice (213) du corps (210) communique avec la deuxième partie, de telle sorte que la barre élastique (245) est au moins partiellement reçue dans la deuxième partie de l'ouverture ; et
une troisième partie (236) disposée adjacente à la deuxième partie opposée à la première partie, la troisième partie ayant une largeur sensiblement uniforme (236W),
dans lequel une largeur maximale (234W) de la deuxième partie est supérieure à la largeur de chacune des première et troisième parties, et dans lequel chacune des première, deuxième et troisième parties reçoit au moins partiellement la partie allongée (242) à travers celles-ci.

4. Appareil orthodontique selon la revendication 1, dans lequel le corps comprend en outre une première surface (115) et une deuxième surface (116) opposée à la première surface ; et dans lequel les première et deuxième surfaces définissent au moins partiellement la partie d'insertion (122) de la fente (120) entre elles.

5. Appareil orthodontique selon la revendication 4, dans lequel le corps (110) comprend en outre :

une troisième surface (117) disposée adjacente et inclinée par rapport à la première surface (115) ;
une quatrième surface (118) disposée adjacente et inclinée par rapport à la deuxième surface (116), dans lequel la quatrième surface est disposée opposée à la troisième surface ; et
une cinquième surface (119) s'étendant entre la troisième surface et la quatrième surface ;
dans lequel les troisième, quatrième et cinquième surfaces définissent au moins partiellement la partie de réception (124) de la fente (120) entre elles.

6. Appareil orthodontique selon la revendication 5, dans lequel l'ouverture (130) s'étend à partir de la quatrième surface (118).

7. Appareil orthodontique selon la revendication 5, dans lequel chacune des première, deuxième, troisième et quatrième surfaces (115, 116, 117, 118) est sensiblement plane.

8. Appareil orthodontique selon la revendication 1, dans lequel l'élément de verrouillage (140, 240, 340) vient en prise avec le corps (110, 210, 310) dans chacun parmi l'état verrouillé (141, 241, 341) et l'état déverrouillé (143, 243, 343).

9. Système orthodontique (10) destiné à une pluralité de dents (50), le système orthodontique comprenant :

un arc dentaire (70) ; et
une pluralité d'appareils orthodontiques (100, 200, 300), dans lequel au moins un appareil orthodontique est un appareil orthodontique selon les revendications 1 à 8.

FIG. 1

FIG. 2B

FIG. 2A

*FIG. 3A*

*FIG. 3B*

EP 4 287 986 B1

*FIG. 4B*

*FIG. 4A*

*FIG. 4C*

*FIG. 4D*

EP 4 287 986 B1

*FIG. 5B*

*FIG. 5A*

*FIG. 5C*

*FIG. 5D*

*FIG. 6*

*FIG. 7B*

*FIG. 7A*

*FIG. 8A*

*FIG. 8C*

*FIG. 8B*

EP 4 287 986 B1

*FIG. 9A*

*FIG. 9B*

EP 4 287 986 B1

FIG. 9D

FIG. 9C

FIG. 10A

FIG. 10B

FIG. 11A

FIG. 11B

EP 4 287 986 B1

*FIG. 11D*

*FIG. 11C*

FIG. 12

**REFERENCES CITED IN THE DESCRIPTION**

**Patent documents cited in the description**

- US 2011143301 A1

- EP 3461454 A1